(19) Europäisches Patentamt / European Patent Office / Office européen des brevets

(11) **EP 3 816 110 B1**

(12) **EUROPEAN PATENT SPECIFICATION**

(45) Date of publication and mention
of the grant of the patent:
**10.05.2023   Bulletin 2023/19**

(21) Application number: **19824740.5**

(22) Date of filing: **06.06.2019**

(51) International Patent Classification (IPC):
**C01G 45/02** (2006.01)

(52) Cooperative Patent Classification (CPC):
**C01G 45/02; H01M 4/50;** C01P 2006/80;
H01M 4/24; Y02E 60/10

(86) International application number:
**PCT/CN2019/090360**

(87) International publication number:
**WO 2020/001254 (02.01.2020 Gazette 2020/01)**

(54) **PREPARATION METHOD FOR ELECTROLYTIC MANGANESE DIOXIDE POWDER**

HERSTELLUNGSVERFAHREN FÜR ELEKTROLYTISCHES MANGANDIOXIDPULVER

MÉTHODE DE PRÉPARATION POUR POUDRE DE DIOXYDE DE MANGANÈSE ÉLECTROLYTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **26.06.2018   CN 201810670065**

(43) Date of publication of application:
**05.05.2021   Bulletin 2021/18**

(73) Proprietor: **Prince Minerals China Ltd.**
**Chongzuo, Guangxi 532200 (CN)**

(72) Inventors:
• **CHEN, Chang**
  **Chongzuo Guangxi 532200 (CN)**
• **ZENG, Wei**
  **Chongzuo Guangxi 532200 (CN)**

(74) Representative: **Ipsilon**
**Le Centralis**
**63, avenue du Général Leclerc**
**92340 Bourg-la-Reine (FR)**

(56) References cited:
EP-A1- 1 128 452       CN-A- 1 610 981
CN-A- 101 502 817      CN-A- 103 572 314
CN-A- 108 793 256

• KWON LEE-MOOK ET AL: "A Study on the Preparation of Electrolytic Manganese Dioxide", JOURNAL OF THE KOREAN CHEMICAL SOCIETY., vol. 17, no. 4, 30 August 1973 (1973-08-30), pages 306-313, XP055912044, KR ISSN: 1017-2548
• WESLEY M DOSE ET AL: "Kinetic analysis of Î3-MnOthermal treatment", JOURNAL OF THERMAL ANALYSIS AND CALORIMETRY, KLUWER ACADEMIC PUBLISHERS, DORDRECHT, NL, vol. 105, no. 1, 24 March 2011 (2011-03-24), pages 113-122, XP019917132, ISSN: 1572-8943, DOI: 10.1007/S10973-011-1445-5
• DUPONT MADELEINE F ET AL: "Electrolytic Manganese Dioxide Structural and Morphological Effects on Capacitive Performance", ELECTROCHIMICA ACTA, ELSEVIER, AMSTERDAM, NL, vol. 191, 9 January 2016 (2016-01-09), pages 479-490, XP029430101, ISSN: 0013-4686, DOI: 10.1016/J.ELECTACTA.2016.01.050
• Pan Decai , Lip Chamgli , Wei Shuncai , Luo Hongbo , Guan Liqun: "The Influence of Different Neutralizers on the Performance of EMD", China 's Manganese Industry, vol. 34, no. 4, 30 November 2016 (2016-11-30), pages 86-88, XP055774346, ISSN: 1002-4336, DOI: 10.14101/j.cnki.issn.1002-4336.2016.04.025

- **Wang Yunzeng: "Electrolysis of Manganese Dioxide" In: Yang Yingyuan: "Modern Manganese Metallurgy", 30 September 2015 (2015-09-30), Tan Xueyu, CN, XP009525617, ISBN: 978-7-5024-6976-4 pages 13-20, * , section 2.1.1 ***

**Description**

**TECHNICAL FIELD**

The present disclosure relates to the field of processing for electrolytic manganese dioxide powder, in particular, to a method for preparing electrolytic manganese dioxide and electrolytic manganese dioxide prepared by the same.

**BACKGROUND**

Since electrolytic manganese dioxide (EMD) has the advantages of low price, sufficient productivity, superior discharge performance, and long-term storage, EMD materials have been widely applied to primary batteries or secondary batteries. For example, EMD can be used as an active material for cathode of an alkaline primary battery or lithium battery, and also be used as a precursor of an active positive material of a lithium ion battery.

A semi-finished product of EMD is prepared by electrolyzing an acid solution containing manganese sulfate and sulfuric acid, wherein an anode of the electrolytic reaction is a titanium plate and a cathode of the electrolytic reaction is made of graphite, copper or the like. During the electrolytic reaction, the EMD generated by the reaction is deposited on the titanium anode plate. When the deposited EMD has a thickness of 1 mm to 75 mm, the EMD is stripped off the titanium anode plate by an external force, thereby obtaining a EMD chip which is a sheet-like object having an irregular shape and generally has a maximum linear dimension not more than 200 mm.

The EMD chip, after being stripped off, needs to be ground and neutralized, so as to finally obtain an EMD powder with a particle size meeting the requirements of battery manufacturers.

As one important raw material in the battery industry, the EMD powder is mixed thoroughly with graphite and an electrolyte, and then is subjected to compressing, granulating and ring pelleting processes. In those processes, the powder or the granules formed by the granulating process may cause abrasion of a contact surface of a tool due to the hardness of the powder or granules and the dispersion-agglomeration characteristics among the granules. In addition, in an extrusion process, due to the relative movement between the granules formed by the granulating process (or due to the friction force between the granules formed by the granulating process and a molding tool), some fine powder particles with different sharp angles (which may be acute or obtuse) may fall off from the original attachments (the granules formed by the granulating process or a ring formed by extruding the granules under pressure) under shearing action, and then are embedded in tiny gaps in fixed tools (e.g. a core rod and an outer tool) and moving tools (e.g. upper and lower punches). When the tools move at a high speed under high pressure, the powder particles embedded in the gaps rub the force-bearing surfaces of fixed tools and moving tools repeatedly, and thus causes local microscopic abrasion to the surfaces of the tools. When subjected to hundreds of thousands or even millions times of such microscopic abrasion, an irreversible and macroscopical worn will be formed on the tools. Obviously, the abrasion of work pieces processed and tools will increase a failure rate of battery processing equipment, and have a negative influence on production cost and production time of battery manufactures.

When the granules formed by the granulating process are subjected to a compression molding process, a density of an obtained molding body varies with a height of the molding body due to the factors such as the friction between the granules formed by the granulating process and the surfaces of the tools, and a local volume change caused by the abovementioned macroscopic abrasion of the tools. Uneven density of the molding body is one of the reasons why a ring body subsequently formed with a compacted body breaks.

Furthermore, in a process of grinding the EMD chip, due to the conversion of mechanical energy into heat energy, a temperature of a ground surface of the EMD chip is increased rapidly, which leads to alkaline potential attenuation of EMD. Meanwhile, a surface of a grinding part is corroded by the mechanochemical reactions during the grinding process, which shortens the service life of the grinding parts and introduces harmful metal impurities into the manganese dioxide powder. CN 108 793 256 A discloses a method for preparing electrolytic manganese dioxide (EMD), comprising pulverizing and rinsing alkaline grade EMD; neutralizing the rinsed products twice using sodium hydroxide, sodium bicarbonate and sodium hydroxide with sodium bicarbonate in turn; rinsing the crude product resulted from the neutralization; and eventually grinding the product into a powder.

**SUMMARY**

The present disclosure aims to provide a method for preparing EMD powder, which can solve at least one of the above problems.

In order to achieve the above objective, in a first aspect of the present disclosure, provided is a method for preparing EMD powder including:

    providing a EMD chip; and

performing a grinding step and a neutralization step, with adding an aid agent including an alkaline earth oxide powder in at least one of the grinding step and the neutralization step.

Preferably, the grinding step includes:

blending an object to be ground with the aid agent at a weight ratio of 100 : (0.01-1) to obtain a first mixture; and grinding the first mixture.

Preferably, the weight ratio of the object to be ground to the alkaline earth oxide powder in the aid agent is 100:(0.01-0.5).
Preferably, the neutralizing step includes:

blending an object to be neutralized with the aid agent at a weight ratio of 100 : (0.01-1) to obtain a second mixture; and neutralizing the second mixture.

Preferably, the weight ratio of the object to be neutralized to the alkaline earth oxide powder is 100 : (0.01-0.5).
Preferably, the aid agent is a slurry of the alkaline earth oxide powder.
Preferably, the alkaline earth oxide powder includes magnesium oxide powder and/or calcium oxide powder.
Preferably, the aid agent is added in the grinding step.
Preferably, the method for preparing EMD powder satisfies any one of the following conditions:

the grinding step is carried out before the neutralization step, and the aid agent is added only in the grinding step; the grinding step is carried out before the neutralization step, and the aid agent is added both in the grinding step and in the neutralization step;
the grinding step is carried out after the neutralization step, and the aid agent is added only in the grinding step; and the grinding step is carried out after the neutralization step, and the aid agent is added both in the grinding step and in the neutralization step.

## BRIEF DESCRIPTION OF THE DRAWINGS

The accompanying drawings are intended to provide further understanding of the present disclosure and are incorporated in and constitute a part of the Specification. The drawings, together with the following specific embodiments, are intended to explain the present disclosure, rather than limiting the present disclosure. In the drawings:

Fig. 1 is a flowchart illustrating an embodiment of the method provided by the present disclosure;
Fig. 2 is a flowchart of the method provided by Preparation Example 1 of the present disclosure;
Fig. 3 is a flowchart of the method provided by Preparation Example 2 of the present disclosure;
Fig. 4 is a flowchart of the method provided by Preparation Example 3of the present disclosure;
Fig. 5 is a flowchart of the method provided by Preparation Example 4 of the present disclosure;
Fig. 6 is a flowchart of the method provided by Preparation Example 5 of the present disclosure;
Fig. 7 is a flowchart of the method provided by Preparation Example 6 of the present disclosure;
Fig. 8 is a flowchart of the method provided by Preparation Example 7 of the present disclosure;
Fig. 9 is a flowchart of the method provided by Preparation Example 8 of the present disclosure; and
Fig. 10 is a flowchart of preparing a battery.

## DETAILED DESCRIPTION

The specific embodiments of the present disclosure are described in detail below with reference to the drawings. It should be understood that the specific embodiments described herein are merely for illustrating and explaining the present disclosure, but do not constitute any limitation to the present disclosure.
In one aspect of the present disclosure, provided is a method for preparing EMD powder including:

providing a EMD chip; and
performing a grinding step and a neutralization step, with adding an aid agent including an alkaline earth oxide powder in at least one of the grinding step and the neutralization step.

The present disclosure does not make any particular limitation to the sequence of the grinding step and the neutralization step. Therefore, the preparation method provided by the present disclosure includes the following six technical solutions:

(1) the grinding step is carried out before the neutralization step, and the aid agent is added only in the grinding step;
(2) the grinding step is carried out before the neutralization step, and the aid agent is added only in the neutralization step;
(3) the grinding step is carried out before the neutralization step, and the aid agent is added both in the grinding step and in the neutralization step;
(4) the grinding step is carried out after the neutralization step, and the aid agent is added only in the grinding step;
(5) the grinding step is carried out after the neutralization step, and the aid agent is added only in the neutralization step; and
(6) the grinding step is carried out after the neutralization step, and the aid agent is added both in the grinding step and in the neutralization step.

When the EMD powder prepared by the method of the present disclosure is used in an extrusion-granulation process and a ring pelleting process for battery production, the abrasion of equipment can be reduced with any one of the six technical solutions. Compared with the EMD prepared from the same raw materials with the conventional method, the EMD prepared by the method of the present disclosure has a higher alkaline potential. In addition, a ring body formed by a ring pelleting process with the EMD powder prepared by the method of the present disclosure is more uniform in density and thus not easy to break. The above six technical solutions of the method of the present disclosure are described in detail below.

In the technical solution (1), the grinding step is carried out before the neutralization step, in other words, an object to be ground in the grinding step is a mixture of an acidic EMD chip and the aid agent. Since the EMD chip is acidic, the alkaline earth oxide powder in the aid agent will react with acidic substance in the EMD chip during grinding the object to be ground.

Large particles are broken usually by three kinds of external forces, i.e. extrusion force, stretching force and shearing force. When the particles are broken into smaller particles, the smaller particles have a larger strength. The breakage of particles is generally considered to be achieved by direct impacting and smashing performed to large particles with grinding parts, and surface smashing caused by grinding. The EMD chip is a brittle material with high hardness, and is easy to shearing fracture or dislocation fracture under stress. As the EMD has a crystal structure of defective $\gamma$-MnO2, under an uneven external force (for example, an external force in a crushing and grinding process), the crystal grains with dislocation arrangements which are apt to slide, move relatively to each other; thereby causing local plastic deformation or forming micro-cracks. Under action of continuous stress, the deformed parts or micro-cracks will expand to cause brittle fractures. The brittle factures can lead to damage of the crystal lattice at a fractured surface and formation of irregular and sharp-angled particles. Under the stress, blocky solids are broken into a small amount of particles having relatively large sizes, a large amount of powders, and a few particles having intermediate sizes. The surface smashing caused by friction or grinding may destroy surface structures of the particles having relatively large sizes, and thus generates a large amount of fine powder. In terms of particle size distribution, volume smashing such as brittle fracture results in a narrower particle size distribution, while the surface smashing results in a broader particle size distribution.

In the method for preparing EMD provided by the present disclosure, since the hardness of the alkaline earth oxide powder in the aid agent is smaller than that of manganese dioxide, the aid agent can also serve as a lubricant in the grinding process, so as to reduce the wear of the mill part performing the grinding step. Moreover, the lubricating effect of the aid agent can also moderate the transmission of the stress when the EMD chip is ground, which reduces the frequency of brittle fracture of the EMD caused by a shearing force in a mill part and the probability of brittle fracture of the EMD chip in the grinding process, allows production of a grinding product having more regular shape, more reasonable particle size distribution and less ultrafine particles, and endows the EMD powder finally obtained with the preparation method with better packing performance.

The mill partused in the grinding step generally includes a mill part made of die steel. When manganese dioxide is ground by the mill part, the surface of the mill part is more or less worn, so that impurities such as Fe, Cr, and Cu are brought into the grinding product and finally remain in the obtained EMD powder. In the method for preparing EMD provided by the present disclosure, the aid agent is added in the grinding step, so that the probability of mechanochemical reaction can be reduced, and the mechanochemical corrosion of the surface of the mill part in the grinding process can be reduced, thereby prolonging the service life of the mill part and reducing the amount of the impurities such as Fe, Cr, and Cu which are brought into the EMD powder due to the abrasion of the mill equipment. In a battery, Cu will easily lead to self-discharge, and Fe and Cr will easily lead to flatulence and liquid leakage. As described above, the EMD powder prepared with the method provided by the present disclosure contains fewer impurities such as Fe, Cr, and Cu, so that a battery prepared from such EMD powder has good performance and is not easily to generate adverse phenomena such as self-discharge, gassing, and electrolyte leakage.

Since the EMD powder prepared by adopting the technical solution (1) has a uniform particle size distribution, a product obtained by subjecting the EMD to a granulation process or a ring pelleting process has a high packing density, and is not prone to generate defects such as cracks and fractures. In addition, the EMD powder prepared by adopting the technical solution (1) has less ultrafine particles, so that the damage to the extrusion tools used in the extrusion granulation process and the ring pelleting process is reduced.

In the technical solution (2), the aid agent is added only in the neutralization step. It should be noted that, in the technical solution (2), the grinding product obtained after the grinding step is neutralized with an alkaline solution (e.g. NaOH solution). With the aid agent comprising the alkaline earth oxide powder added in the neutralization step, the alkaline earth oxide firstly reacts with $H^+$ and generates alkaline earth metal cations which can replace the alkali metal cations (e.g. $Na^+$) of the surface of the EMD since the alkaline earth metal cations has a higher adsorption capacity than that of alkali metal cations, thereby reducing the consumption of the alkaline solution in the neutralization step and the amount of the residual alkali metal cations in the finally obtained EMD powder.

After the neutralization step is completed, the neutralized product needs to be dried to obtain an EMD powder. The obtained EMD powder contains a small amount of residual alkaline earth oxide powder which has not reacted with $H^+$. In the extrusion granulation process or the ring pelleting process, the residual alkaline earth oxide powder in the neutralized product can function as a lubricant during the extrusion to reduce the surface friction, so that the extrusion tools can be protected and the damage to the extrusion tools can be reduced.

The technical solution (3) is a combination of the technical solutions (1) and (2), and certainly has the advantages of the technical solutions (1) and (2), which will not be discussed further here.

In the technical solution (4), the object to be ground is the neutralized product obtained after the neutralization step, which is almost neutral; so that the alkaline earth oxide powder in the aid agent hardly undergoes an acid-base neutralization reaction. Since the alkaline earth oxide powder in the aid agent has a smaller hardness than that of manganese dioxide, the aid agent can also serve as a lubricant in the grinding process and thus the wear of the mill partused in the grinding step can be reduced. Moreover, the lubricating effect of the aid agent can also reduce the probability of brittle fracture of the EMD chip in the grinding process, allow production of a grinding product having more regular shape, more reasonable particle size distribution and less ultrafine particles, and endow the EMD powder finally obtained with the preparation method with better packing performance. In addition, in the technical solution (4), the aid agent can also reduce the probability of mechanochemical reaction and the mechanochemical corrosion of the surface of the mill part in the grinding process, thereby prolonging the service life of the mill part and reducing the amount of the impurities such as Fe, Cr, and Cu which are brought into the EMD powder due to the abrasion of the mill equipment.

In the technical solution (5), with the aid agent being added in the neutralization step, the consumption of the alkali metal solution can be reduced and the amount of the residual alkali metal cations in the neutralized product can be reduced. The alkaline earth oxide powder that does not participate in the neutralization reaction can serve as a lubricant when the grinding step is performed. The working mechanism of the alkaline earth oxide powder in the grinding step has been described in detail above and thus will not be repeated here again.

The technical solution (6) is a combination of the technical solutions (4) and (5) and has the advantages of the technical solutions (4) and (5), which will not be repeated in detail here again.

As preferred embodiments of the present disclosure, the aid agent is added in the grinding step. In other words, the method provided by the present disclosure is preferably any one of the technical solutions (1), (3), (4) and (6).

In addition, the extrusion tools used in the extrusion granulation process and the ring pelleting process of the EMD powder are made of die steel, which contains Fe as a main component and other elements such as Cr and Cu. As described above, the alkaline earth oxide can serve as a lubricant, which reduces the damage to the extrusion tools in the extrusion processes and prolongs the service life of the tools.

When the aid agent is added in the grinding step, the grinding step includes:

blending the object to be ground with the aid agent to obtain a first mixture, with a weight ratio of the object to be ground to the alkaline earth oxide powder in the aid agent being 100 : (0.01-1); and
grinding the first mixture.

It should be understood that the "object to be ground" here may be a EMD chip which has not subjected to the neutralization step, or a neutralized product obtained after the EMD chip is processed in the neutralization step.

Preferably, the weight ratio of the object to be ground to the alkaline earth oxide powder in the aid agent is 100:(0.01-0.5).

According to a preferred embodiment of the present disclosure, the neutralizing step includes:

blending an object to be neutralized with the aid agent to obtain a second mixture, with a weight ratio of the object to be neutralized to the alkaline earth oxide powder in the aid agent being 100:(0.01-1); and
neutralizing the second mixture.

In this embodiment, the object to be neutralized may be a EMD chip or a grinding product obtained by grinding the EMD chip. The grinding product may be a grinding product obtained by grinding the EMD chip in the presence of the aid agent, or a grinding product obtained by directly grinding without adding the aid agent.

Preferably, the weight ratio of the object to be neutralized to the alkaline earth oxide powder is 100:(0.01-0.5).

In the above embodiments, the weight ratio of the object to be neutralized to the alkaline earth oxide powder is 100:(0.01-0.5). With such weight ratio, it can be ensured that the neutralized product would maintain its good performances and not be introduced with excessive alkaline earth metal cations.

The present disclosure does not make any particular limitation to the order of the grinding step and the neutralization step. Therefore, the neutralization step may be carried out before the grinding step, or after the grinding step.

In the present disclosure, there is no special requirement of a specific form of the aid agent. For example, the aid agent may be in a form of powder.

When the grinding step is carried out by the mill equipment, powder particles reaching the required particle sizes are taken out of the mill partby means of air blowing or negative-pressure suction. Under such circumstance, the aid agent is preferably a slurry of the alkaline earth oxide powder. By this way, the alkaline earth oxide having a small particle size and a light weight would not be taken out of the grinder too early, so that the alkaline earth oxide can play a role in reducing the brittle fracture of EMD raw material during the whole grinding process and thereby further reducing the generation of irregularly shaped fine powder. Preferably, the solid content of the emulsion ranges from 1% to 10%.

In the present disclosure, the slurry may comprise deionized water, softened water or tap water as a solvent.

In the present disclosure, the specific components of the alkaline earth oxide powder are not particularly specified. According to a preferred embodiment of the present disclosure, the alkaline earth oxide powder includes magnesium oxide powder. The Mohs hardness of a EMD chip ranges from about 7 to 8, and the Mohs hardness of magnesium oxide is about 5.5; the shear modulus of magnesium oxide is about 126GPa, and the shear modulus of manganese oxide is about 60GPa; and the bulk modulus of magnesium oxide is about 153GPa, and the bulk modulus of manganese dioxide is about 109GPa. Therefore, the magnesium oxide powder added in the grinding step can perform a good lubricating function during the whole grinding process.

The shear modulus of magnesium oxide is obviously different from that of manganese dioxide, and the elastic modulus of magnesium oxide is also obviously different from that of manganese dioxide, which further moderates the transmission of the stress in the mechanical grinding process, thereby reducing the frequency of the brittle fracture of the EMD caused by the shearing force in the mill part.

In the case where the aid agent comprising the magnesium oxide powder is added in the neutralization step, magnesium ions are more prone to occupy an active surface of the surface of manganese dioxide, so divalent alkaline earth metal generated after the magnesium oxide powder reacts with hydrogen ions of the surface of EMD can easily replace the alkali metal ions on the adsorption surface of EMD, and thus the residual of alkali metal ions can be reduced.

It should be noted that the present disclosure is not limited thereto. For example, in another aspect of the present disclosure, the alkaline earth oxide powder further comprises calcium oxide powder.

In other words, the alkaline earth oxide powder in the aid agent may be magnesium oxide powder, calcium oxide powder, or a mixture thereof.

In the present disclosure, there is no special requirement of grinding mode used in the grinding step. For example, the grinding may be performed by various ball mills, Raymond mills, vertical mills, stirring mills, roller mills and conical mills. In the grinding step, a blocky EMD chip is ground to a particle size ranging from $d_{50} = 10\mu m$ to $d_{50} = 100\mu m$.

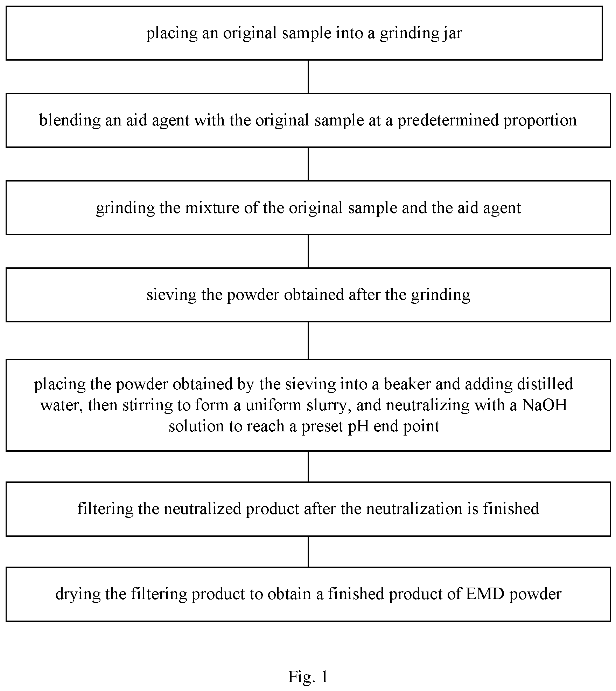

An embodiment of adding the aid agent in the grinding step is illustrated by Fig. 1. In such embodiment, the method for preparing EMD includes:

placing an original sample into a grinding jar;
blending an aid agent with the original sample at a predetermined proportion;
grinding the mixture of the original sample and the aid agent;
sieving the powder obtained after the grinding;
placing the powder obtained by the sieving into a beaker and adding distilled water, then stirring to form a uniform slurry, and neutralizing with a NaOH solution to reach a preset pH end point;
filtering the neutralized product after the neutralization is finished; and
drying the filtering product to obtain a finished product of EMD powder.

In the present disclosure, there is no special requirement of the preset pH end point. For example, the preset pH end point may be a pH value of 5.5.

In a second aspect of the present disclosure, there is provided an EMD powder prepared with the above method of the present disclosure.

The EMD powder obtained with the above method is subsequently washed, dried, blended and packaged out as a product for a battery manufacturer.

Preparation examples

Several EMD chips were provided, pre-crushed by a small experimental jaw crusher, and sieved with a 10-mesh screen, and the under 10-mesh cut of the EMD particles processed was taken as an original sample A for a grinding experiment. The jaw crusher is a PE-40×80-F anti-pollution miniature jaw crusher made by Guiyang Prospecting Machinery Factory, and the 10-mesh screen is made by HAVER&BOECKER (Germany).

Several EMD chips were provided and used as an original sample B for the grinding experiment.

Preparation Example 1

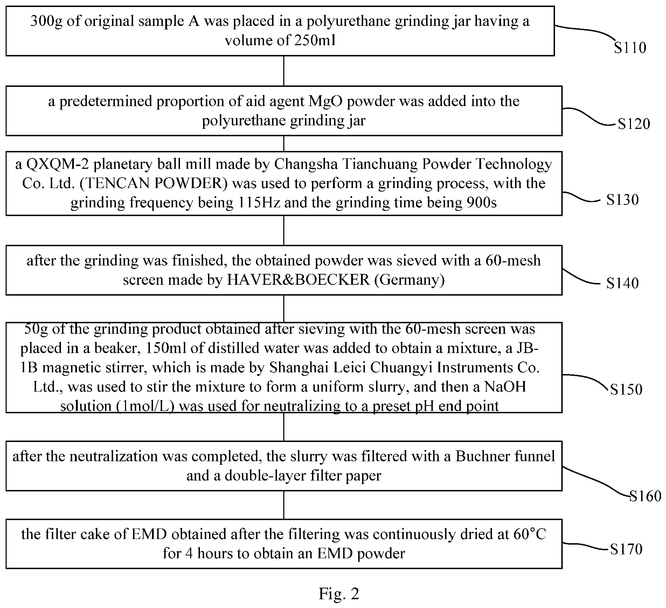

The method illustrated by Fig. 2 was adopted to prepare an EMD powder:

in step S110, 300g of original sample A was placed in a polyurethane grinding jar having a volume of 250ml;
in step S120, a predetermined proportion of aid agent MgO powder was added into the polyurethane grinding jar;
in step S130, a QXQM-2 planetary ball mill made by Changsha Tianchuang Powder Technology Co. Ltd. (TENCAN POWDER) was used to perform a grinding process, with the grinding frequency being 115Hz and the grinding time being 900s;
in step S140, after the grinding was finished, the obtained powder was sieved with a 60-mesh screen made by HAVER&BOECKER (Germany);
in step S150, 50g of the grinding product obtained after sieving with the 60-mesh screen was placed in a beaker, 150ml of distilled water was added to obtain a mixture, a JB- 1B magnetic stirrer, which is made by Shanghai Leici Chuangyi Instruments Co. Ltd., was used to stir the mixture to form a uniform slurry, and then a NaOH solution (1mol/L) was used for neutralizing to a preset pH end point;
in step S160, after the neutralization was completed, the slurry was filtered with a Buchner funnel and a double-layer filter paper; and
in step S170, the filter cake of EMD obtained after the filtering was continuously dried at 60°C for 4 hours to obtain an EMD powder.

Preparation Example 2

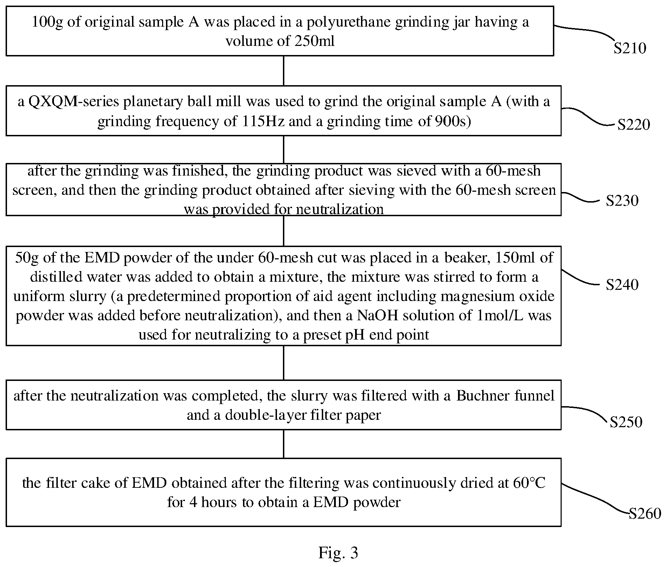

The method illustrated by Fig. 3 was adopted to prepare an EMD powder:

in step S210, 100g of original sample A was placed in a polyurethane grinding jar having a volume of 250ml;
in step S220, a QXQM-series planetary ball mill was used to grind the original sample A (with a grinding frequency of 115Hz and a grinding time of 900s);
in step S230, after the grinding was finished, the grinding product was sieved with a 60-mesh screen, and then the grinding product obtained after sieving with the 60-mesh screen was provided for neutralization;
in step S240, 50g of the EMD powder of the under 60-mesh cut was placed in a beaker, 150ml of distilled water was added to obtain a mixture, the mixture was stirred to form a uniform slurry (a predetermined proportion of aid agent including magnesium oxide powder was added before neutralization), and then a NaOH solution of 1mol/L was used for neutralizing to a preset pH end point;
in step S250, after the neutralization was completed, the slurry was filtered with a Buchner funnel and a double-layer filter paper; and
in step S260, the filter cake of EMD obtained after the filtering was continuously dried at 60°C for 4 hours to obtain a EMD powder.

Preparation Example 3

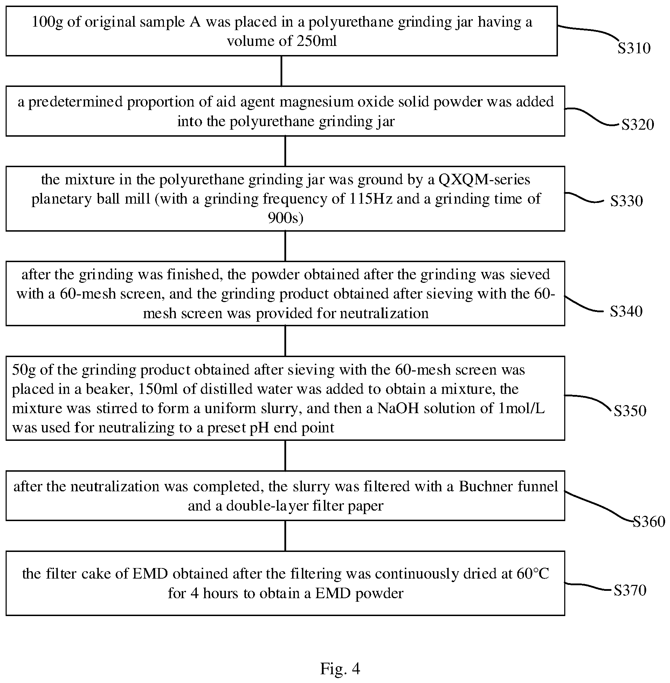

The method illustrated by Fig. 4 was adopted to prepare an EMD powder:

in step S310, 100g of original sample A was placed in a polyurethane grinding jar having a volume of 250ml;
in step S320, a predetermined proportion of aid agent magnesium oxide solid powder was added into the polyurethane grinding jar;
in step S330, the mixture in the polyurethane grinding jar was ground by a QXQM-series planetary ball mill (with a grinding frequency of 115Hz and a grinding time of 900s);
in step S340, after the grinding was finished, the powder obtained after the grinding was sieved with a 60-mesh screen, and the grinding product obtained after sieving with the 60-mesh screen was provided for neutralization;
in step S350, 50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point;

in step S360, after the neutralization was completed, the slurry was filtered with a Buchner funnel and a double-layer filter paper; and

in step S370, the filter cake of EMD obtained after the filtering was continuously dried at 60°C for 4 hours to obtain a EMD powder.

Preparation Example 4

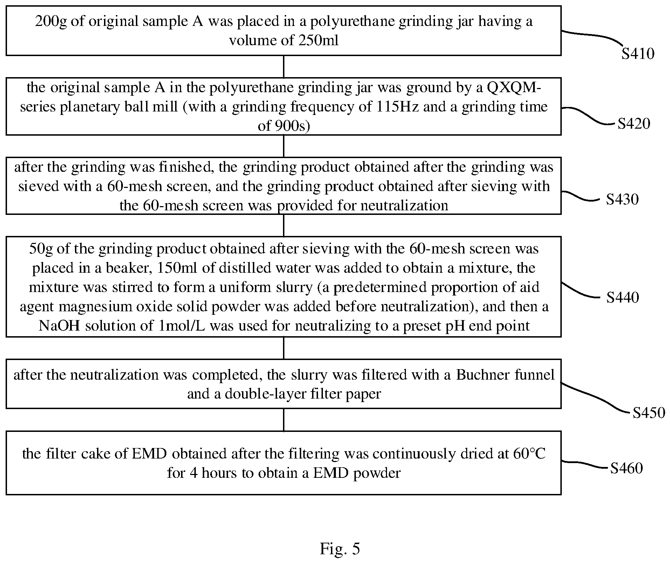

The method illustrated by Fig. 5 was adopted to prepare an EMD powder:

in step S410, 200g of original sample A was placed in a polyurethane grinding jar having a volume of 250ml;

in step S420, the original sample A in the polyurethane grinding jar was ground by a QXQM-series planetary ball mill (with a grinding frequency of 115Hz and a grinding time of 900s);

in step S430, after the grinding was finished, the grinding product obtained after the grinding was sieved with a 60-mesh screen, and the grinding product obtained after sieving with the 60-mesh screen was provided for neutralization;

in step S440, 50g of the grinding product obtained after sieving with the 60-mesh screen was placed in a beaker, 150ml of distilled water was added to obtain a mixture, the mixture was stirred to form a uniform slurry (a predetermined proportion of aid agent magnesium oxide solid powder was added before neutralization), and then a NaOH solution of 1mol/L was used for neutralizing to a preset pH end point;

in step S450, after the neutralization was completed, the slurry was filtered with a Buchner funnel and a double-layer filter paper; and

in step S460, the filter cake of EMD obtained after the filtering was continuously dried at 60°C for 4 hours to obtain a EMD powder.

Preparation Example 5

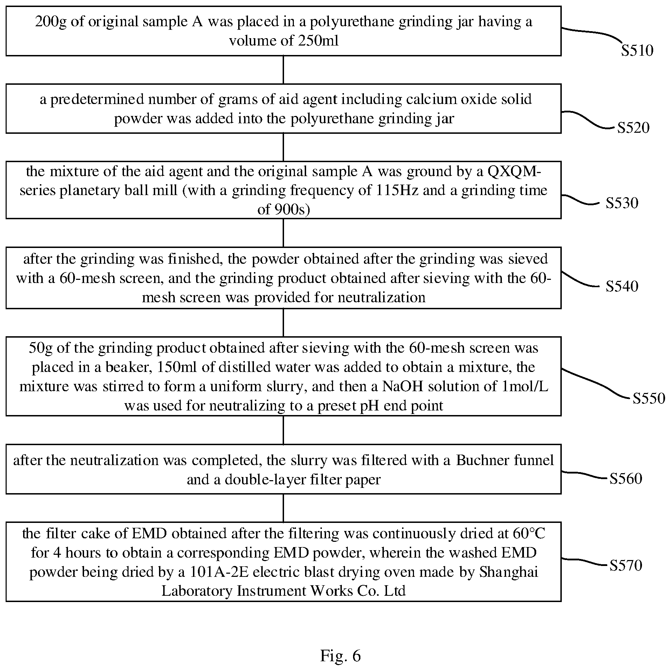

The preparation method illustrated by Fig. 6 was adopted to prepare an EMD powder:

in step S510, 200g of original sample A was placed in a polyurethane grinding jar having a volume of 250ml;

in step S520, a predetermined number of grams of aid agent including calcium oxide solid powder was added into the polyurethane grinding jar;

in step S530, the mixture of the aid agent and the original sample A was ground by a QXQM-series planetary ball mill (with a grinding frequency of 115Hz and a grinding time of 900s);

in step S540, after the grinding was finished, the powder obtained after the grinding was sieved with a 60-mesh screen, and the grinding product obtained after sieving with the 60-mesh screen was provided for neutralization;

in step S550, 50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point;

in step S560, after the neutralization was completed, the slurry was filtered with a Buchner funnel and a double-layer filter paper; and

in step S570, the filter cake of EMD obtained after the filtering was continuously dried at 60°C for 4 hours to obtain a corresponding EMD powder, wherein the washed EMD powder being dried by a 101A-2E electric blast drying oven made by Shanghai Laboratory Instrument Works Co. Ltd..

Preparation Example 6

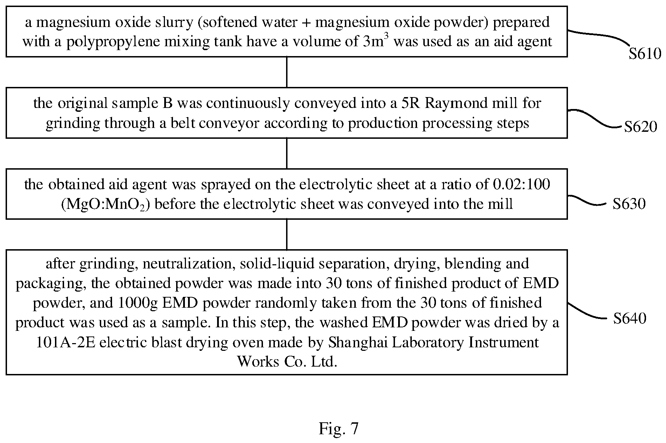

The method illustrated by Fig. 7 was adopted to prepare an EMD powder:

in step S610, a magnesium oxide slurry (softened water + magnesium oxide powder) prepared with a polypropylene mixing tank have a volume of $3m^3$ was used as an aid agent;

in step S620, the original sample B was continuously conveyed into a 5R Raymond mill for grinding through a belt conveyor according to production processing steps;

in step S630, the obtained aid agent was sprayed on the electrolytic sheet at a ratio of 0.02:100 ($MgO:MnO_2$) before the electrolytic sheet was conveyed into the mill; and

in step S640, after grinding, neutralization, solid-liquid separation, drying, blending and packaging, the obtained powder was made into 30 tons of finished product of EMD powder, and 1000g EMD powder randomly taken from the 30 tons of finished product was used as a sample. In this step, the washed EMD powder was dried by a 101A-2E electric blast drying oven made by Shanghai Laboratory Instrument Works Co. Ltd..

Preparation Example 7

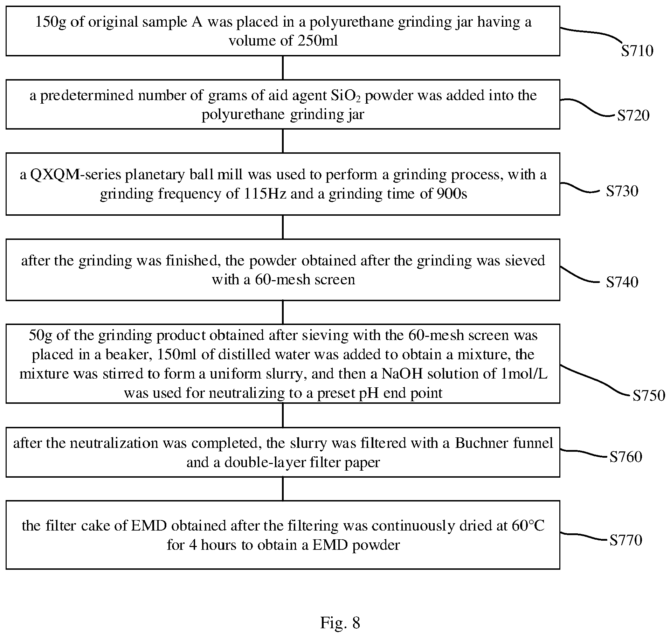

The method illustrated by Fig. 8 was adopted to prepare an EMD powder:

in step S710, 150g of original sample A was placed in a polyurethane grinding jar having a volume of 250ml;
in step S720, a predetermined number of grams of aid agent $SiO_2$ powder was added into the polyurethane grinding jar;
in step S730, a QXQM-series planetary ball mill was used to perform a grinding process, with a grinding frequency of 115Hz and a grinding time of 900s;
in step S740, after the grinding was finished, the powder obtained after the grinding was sieved with a 60-mesh screen;
in step S750, 50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point;
in step S760, after the neutralization was completed, the slurry was filtered with a Buchner funnel and a double-layer filter paper; and
in step S770, the filter cake of EMD obtained after the filtering was continuously dried at 60°C for 4 hours to obtain a EMD powder.

Preparation Example 8

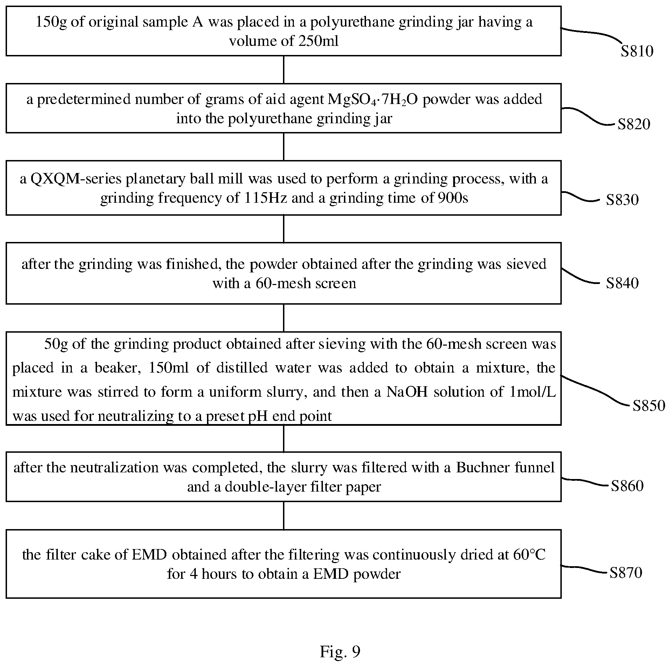

The method illustrated by Fig. 9 was adopted to prepare an EMD powder:

in step S810, 150g of original sample A was placed in a polyurethane grinding jar having a volume of 250ml;
in step S820, a predetermined number of grams of aid agent $MgSO_4 \cdot 7H_2O$ powder was added into the polyurethane grinding jar;
in step S830, a QXQM-series planetary ball mill was used to perform a grinding process, with a grinding frequency of 115Hz and a grinding time of 900s;
in step S840, after the grinding was finished, the powder obtained after the grinding was sieved with a 60-mesh screen;
in step S850, 50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point;
in step S860, after the neutralization was completed, the slurry was filtered with a Buchner funnel and a double-layer filter paper; and
in step S870, the filter cake of EMD obtained after the filtering was continuously dried at 60°C for 4 hours to obtain a EMD powder.

Comparative Example 1

The above method was adopted to prepare an EMD powder, and the predetermined number of grams in the step S120 was 0g.

Example 1

The above method was adopted to prepare an EMD powder, and the predetermined number of grams in the step S120 was 0.6g (a weight ratio of original sample to aid agent was 100:0.2).

Example 2

The above method was adopted to prepare an EMD powder, and the predetermined number of grams in the step S120 was 1.5g (a weight ratio of original sample to aid agent was 100:0.5).

Example 3

The above method was adopted to prepare an EMD powder, and the predetermined number of grams in the step S 120 was 2.85g (a weight ratio of original sample to aid agent was 100:0.95).

Comparative Example 2

The method of the Preparation Example 2 was adopted to prepare an EMD powder, and 0g of aid agent was added in the step S240.

Example 4

The method of the Preparation Example 2 was adopted to prepare an EMD powder, and 0.1g of aid agent was added in the step S240 (a weight ratio of original sample to aid agent was 100:0.2).

Example 5

The method of the Preparation Example 2 was adopted to prepare an EMD powder, and 0.25g of aid agent was added in the step S240 (a weight ratio of original sample to aid agent was 100:0.5).

Example 6

The method of the Preparation Example 2 was adopted to prepare an EMD powder, and 0.475g of aid agent was added in the step S240 (a weight ratio of original sample to aid agent was 100:0.95)

Comparative Example 3

The method of the Preparation Example 3 was adopted to prepare an EMD powder, and 0g of aid agent was added in the step S320.

Example 7

The method of the Preparation Example 3 was adopted to prepare an EMD powder, and 0.2g of aid agent was added in the step S320 (a weight ratio of original sample to aid agent was 100:0.2).

Example 8

The method of the Preparation Example 3 was adopted to prepare an EMD powder, and 0.5g of aid agent was added in the step S320 (a weight ratio of original sample to aid agent was 100:0.5).

Example 9

The method of the Preparation Example 3 was adopted to prepare an EMD powder, and 0.95g of aid agent was added in the step S320 (a weight ratio of original sample to aid agent was 100:0.95).

Comparative Example 4

The method of the Preparation Example 4 was adopted to prepare an EMD powder, and 0g of aid agent was added in the step S440.

Example 10

The method of the Preparation Example 4 was adopted to prepare an EMD powder, and 0.1g of aid agent was added in the step S440 (a weight ratio of original sample to aid agent was 100:0.2).

Example 11

The method of the Preparation Example 4 was adopted to prepare an EMD powder, and 0.25g of aid agent was added in the step S440 (a weight ratio of original sample to aid agent was 100:0.5).

Example 12

The method of the Preparation Example 4 was adopted to prepare an EMD powder, and 0. 475g of aid agent was added in the step S440 (a weight ratio of original sample to aid agent was 100:0.95).

Comparative Example 5

The method of the Preparation Example 5 was adopted to prepare an EMD powder, and 0g of aid agent was added in the step S520.

Example 13

The method of the Preparation Example 5 was adopted to prepare an EMD powder, and 0.4g of aid agent was added in the step S520 (a weight ratio of original sample to aid agent was 100:0.2).

Comparative Example 6

The original sample B was ground by a 5R Raymond mill to obtain an EMD powder.

Example 14

The method of the Preparation Example 6 was adopted to prepare an EMD powder, and 1000g EMD powder randomly taken from 30 tons of the finished product was used as a sample in the step S640 (a weight ratio of original sample to aid agent was 100:0.02).
It should be noted that, when the same 5R Raymond mill was used to obtain the EMD powder in the Comparative Example 6 and the EMD powder in the Example 14 separately, the production equipment was manually cleaned between the execution of the Comparative Example 6 and the execution of the Example 14, so as to avoid cross contamination which may affect the determination of experimental results. The sample interval between the Comparative Example 6 and the Example 14 was more than 100 tons.

Comparative Example 7

The method of the Preparation Example 7 was adopted to prepare an EMD powder, and the predetermined number of grams in the step S720 was 0g.

Comparative Example 8

The method of the Preparation Example 7 was adopted to prepare an EMD powder, and the predetermined number of grams in the step S720 was 0.3g (a weight ratio of original sample to aid agent was 100:0.2).

Comparative Example 9

The method of the Preparation Example 7 was adopted to prepare an EMD powder, and the predetermined number of grams in the step S720 was 0.75g (a weight ratio of original sample to aid agent was 100:0.5).

Comparative Example 10

The method of the Preparation Example 8 was adopted to prepare an EMD powder, and the predetermined number of grams in the step S820 was 0g.

Comparative Example 11

The method of the Preparation Example 8 was adopted to prepare an EMD powder, and the predetermined number of grams in the step S820 was 0.3g (a weight ratio of original sample to aid agent was 100:0.2).

Comparative Example 12

The method of the Preparation Example 8 was adopted to prepare an EMD powder, and the predetermined number of grams in the step S820 was 0.75g (a weight ratio of original sample to aid agent was 100:0.5).

Production Example

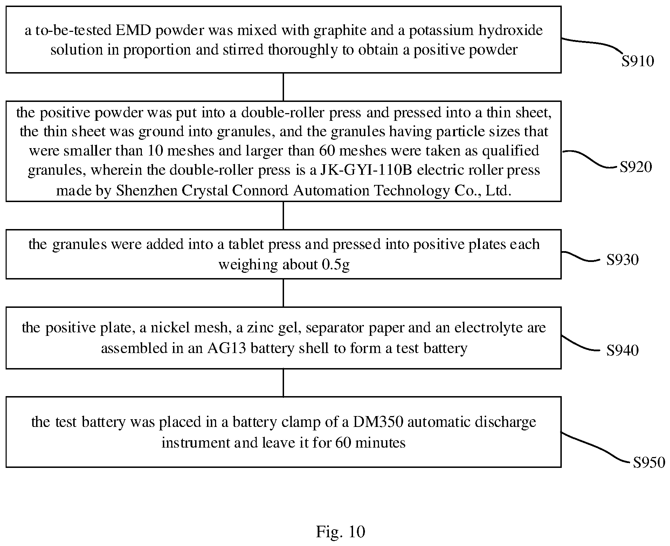

The method illustrated by Fig. 10 was adopted to prepare a battery:

in step S910, a to-be-tested EMD powder was mixed with graphite and a potassium hydroxide solution in proportion and stirred thoroughly to obtain a positive powder;

in step S920, the positive powder was put into a double-roller press and pressed into a thin sheet, the thin sheet was ground into granules, and the granules having particle sizes that were smaller than 10 meshes and larger than 60 meshes were taken as qualified granules, wherein the double-roller press is a JK-GYI-110B electric roller press made by Shenzhen Crystal Connord Automation Technology Co., Ltd.;

in step S930, the granules were added into a tablet press and pressed into positive plates each weighing about 0.5g;

in step S940, the positive plate, a nickel mesh, a zinc gel, separator paper and an electrolyte are assembled in an AG13 battery shell to form a test battery; and

in step S950, the test battery was placed in a battery clamp of a DM350 automatic discharge instrument and leave it for 60 minutes.

Test Examples

It should be noted that the EMD powders prepared in the same preparation example were taken as one group in the present disclosure.

1. Compaction density test

The EMD powders obtained in the Comparative Examples 1 to 12 and the Examples 1 to 14 were subjected to a compaction density test by use of an FT-100F single punch tablet compression machine made by Ningbo Rooko Instrument Co. Ltd..

A main body of the single punch tablet compression machine that performs a compaction process consists of a long punch, a short punch, a cylinder molding tool and a gland, and the compaction process was performed with a 10.8mm molding tool. The compaction process was performed under a pressure of 1000kgf (109.2Mpa), a test sample having a weight (G1) of 1000mg ($\pm$ 50mg) was taken and placed in the molding tool for compaction, the pressure-holding time in the compaction process was 10s, a thickness H1 of the test sample during the compaction process was read from a digital indicator of the single punch tablet compression machine, a compacted tablet was weighed to obtain a weight G2 after demolding, and a thickness H2 of the compacted tablet was measured with a precision vernier caliper after the demolding. A compaction density and an ultrafine particle yield of the compaction process were calculated by formulas.

A compaction density of the tablet during the compaction process was calculated by Formula (1):

$$\frac{4000 \times G2}{3.14 \times 10.8 \times 10.8 \times H1} g/cm^3 \qquad (1)$$

A compaction density of the tablet after the demolding was calculated by Formula (2):

$$\frac{4000 \times G2}{3.14 \times 10.8 \times 10.8 \times H2} g/cm^3 \qquad (2)$$

The ultrafine particle yield of the compaction process was calculated by Formula (3):

$$\frac{G1-G2}{G1} \times 100\% \qquad (3)$$

For ease of analysis, relative compaction densities were used to represent differences between the compaction densities of the EMD powders obtained in the examples and the comparative examples in the same group. In the present disclosure, the relative compaction densities could be obtained by standardizing the compaction densities of the EMD powders obtained in the comparative examples and the examples of each group. The relative compaction density could be calculated by the following Formula (4):

$$D_{\rho ij} = \frac{\rho_{ij}}{\rho_{ii}} \times 100\% \qquad (4)$$

wherein, i denotes the serial number of the comparative example;

j denotes the serial number of the example;

$D_{\rho ij}$ denotes the relative compaction density of the EMD powder obtained in the Example j in the group to which the Comparative Example i belongs;

$\rho_{ij}$ denotes the tablet compaction density of the EMD powder obtained in the Example j in the group to which the Comparative Example i belongs; and

$\rho_{ii}$ denotes the tablet compaction density of the EMD powder obtained in the Comparative Example i in the group to which the Comparative Example i belongs.

Similarly, for ease of analysis, relative ultrafine particle yields were used to represent differences between the ultrafine particle yields of the EMD powders obtained in the examples and the comparative examples in the same group. In the present disclosure, the relative ultrafine particle yields could be obtained by standardizing the ultrafine particle yields of the EMD powders obtained in the comparative examples and the examples of each group. The relative ultrafine particle yield could be calculated by Formula (5):

$$D_{Fij} = \frac{F_{ij}}{F_{ii}} \times 100\% \qquad (5)$$

wherein, i denotes the serial number of the comparative example;

j denotes the serial number of the example;

$D_{Fij}$ denotes the relative ultrafine particle yield of the EMD powder obtained in the Example j in the group to which the Comparative Example i;

$F_{ij}$ denotes the ultrafine particle yield of the EMD powder obtained in the Example j in the group to which the Comparative Example i; and

$F_{ii}$ denotes the ultrafine particle yield of the EMD powder obtained in the Comparative Example i in the group to which the Comparative Example i.

2. Axial surface hardness

The tablets made from the EMD powders obtained in the Comparative Examples 1 to 12 and the Examples 1 to 14 were subjected to an axial surface hardness test by use of an FHR-1 Rockwell hardness tester made by Shenyang Tianxing Testing Instrument Ltd.. The test process was performed as follows:

fixing the tablet molded by compaction onto a testing surface of the hardness tester (under a fixing pressure of 10kgf), rotating a pressure handwheel to increase a testing pressure to 40kgf and maintaining the pressure for 10s; and

rotating the pressure handwheel to quickly reduce the testing pressure to 10kgf, and at the moment reading the hardness value on the dial of the hardness tester.

For ease of analysis, the relative axial surface hardness was used to represent differences between the axial surface hardness of the EMD powders obtained in the examples and the comparative examples in the same group. In the present disclosure, the relative axial surface hardness could be obtained by standardizing the axial surface hardness of the EMD powders obtained in the comparative examples and the examples of each group. The relative axial surface hardness could be calculated by Formula (6):

$$D_{Hij} = \frac{H_{ij}}{H_{ii}} \times 100\% \qquad (6)$$

wherein, i denotes the serial number of the comparative example;

j denotes the serial number of the example;

$D_{Hij}$ denotes the relative axial surface hardness of the EMD powder obtained in the Example j in the group to which the Comparative Example i belongs;

$H_{ij}$ denotes the axial surface hardness of the EMD powder obtained in the Example j in the group to which the Comparative Example i belongs; and

$H_{ii}$ denotes the axial surface hardness of the EMD powder obtained in the Comparative Example i in the group to which the Comparative Example i belongs.

3. Radial strength of the tablet

The tablets made by compacting the EMD powders obtained in the Comparative Examples 1 to 12 and the Examples 1 to 14 were subjected to a radial strength test by use of a YD-1 tablet hardness tester provided by Tianjin Xintianguang Analysis Instrument Ltd.. The test process was as follows:

cleaning powder from the surfaces of the tablet and placing the tablet in a specified region of a testing surface of the tester for testing, and slowly rotating a rotatable disc of the tester to move a pressure punch towards the tablet slowly, so as to apply an extrusion force to the tablet sample to be tested, with a value presented on a digital display window gradually increasing; and
the value presented on the digital display window reaching to the maximum value and the digital display window being locked when the tablet sample to be tested was crushed into pieces, and a buzzer inside the tester starting making a sound intermittently and the value presented at this moment being taken as a strength of the tested tablet sample.

For ease of analysis, the relative radial strength was used to represent differences between the radial strength of tablet of the EMD powders obtained in the examples and the comparative examples in the same group. In the present disclosure, the relative radial strength of tablet could be obtained by standardizing the radial strength of tablet of the EMD powders obtained in the comparative examples and the examples of each group. The relative radial strength of tablet could be calculated by Formula (7):

$$D_{Sij} = \frac{S_{ij}}{S_{ii}} \times 100\% \tag{7}$$

Wherein, i denotes the serial number of the comparative example;
j denotes the serial number of the example;
$D_{Sij}$ denotes the relative radial strength of tablet of the EMD powder obtained in the Example j in the group to which the Comparative Example i belongs;
$S_{ij}$ denotes the radial strength of tablet of the EMD powder obtained in the Example j in the group to which the Comparative Example i belongs; and
$S_{ii}$ denotes the radial strength of tablet of the EMD powder obtained in the Comparative Example i in the group to which the Comparative Example i belongs.

4. Friability of tablet

The tablets made by compacting the EMD powders obtained in the Comparative Examples 1 to 12, and the Examples 1 to 14 were subjected to a friability test by use of a CS-II friability tester made by Tianjin Xuyang Instrument Equipment Co. Ltd.. The test process was as follows:

selecting two test groups of the compacted tablets (each test group includes 10 tablets), cleaning powder from the surfaces of the tablets, weighing each test group to obtain a weight G1 thereof, placing the two test groups into rotary trays on two sides of the tester respectively, and sealing and locking the covers of the rotary trays;
starting the tester to normally rotate the rotary trays, and manually pressing a reset key to stop the rotation of the rotary trays when a value shown on a window of a digital display screen of the tester, which indicates the serial number of the turns of the rotary trays, was changed from 100 to 90; and
opening the covers of the rotary trays slightly, collecting all the residues of the test tablets in each of rotary trays with a 60-mesh screen, sieving the residues in the 60-mesh screen with an ultrasonic vibrating screen for 10s, collecting the residue in the 60-mesh screen after the sieving was finished, and subjecting the residue to precision weighing to obtain the weight thereof G2.

The friability was calculated by Formula (8):

$$\frac{G1-G2}{G1}\times100\% \qquad (8)$$

For ease of analysis, the relative friability was used to represent differences between the friability of the EMD powders obtained in the examples and the comparative examples in the same group. In the present disclosure, the relative friability can be obtained by standardizing the friability of the EMD powders obtained in the comparative examples and the examples of each group. The relative friability can be calculated by Formula (9):

$$D_{Cij}=\frac{C_{ij}}{C_{ii}}\times100\% \qquad (9)$$

wherein, i denotes the serial number of the comparative example;
j denotes the serial number of the example;
$D_{Cij}$ denotes the relative friability of the EMD powder obtained in the Example j in the group to which the Comparative Example i belongs;
$C_{ij}$ denotes the friability of the EMD powder obtained in the Example j in the group to which the Comparative Example i belongs; and
$C_{ii}$ denotes the friability of the EMD powder obtained in the Comparative Example i in the group to which the Comparative Example i belongs.

5. Measurement of alkaline potential

For each EMD sample to be measured, three small steel battery shells, each having an inner diameter of about 11.2mm and a height of about 5.0mm, were placed on a weighing pan of a balance and weighed. Removing the weight of the containers, 350±50mg of the sample powder was put into each small steel can. 100μL of 45% KOH solution was removed from a beaker and added into each small steel can by an automatic pipette. Two pieces of separator paper were added on each small steel can. The three small steel cans were placed on a measuring bench, and covered with caps to allow the EMD to be soaked for 30 minutes to 2 hours. Then a positive pole of a multimeter was connected to a nickel mesh at the bottom of the measuring bench, and a direct current (DC) voltmeter was set to 2V. A mercury/mercury oxide reference electrode was connected to a negative electrode of the voltmeter. The reference electrode was placed on the separator paper of each small steel can until a stable voltage could be read. For the same sample, an average of the measured values of the three small steel cans was taken as the alkaline potential of the sample.

For ease of analysis, the relative alkaline potential was used to represent differences between the alkaline potential of the EMD powders obtained in the examples and the comparative examples in the same group. In the present disclosure, the relative alkaline potential could be obtained by standardizing the alkaline potential of the EMD powders obtained in the comparative examples and the examples of each group. The relative alkaline potential can be calculated by Formula (10):

$$D_{Aij}=\frac{A_{ij}}{A_{ii}}\times100\% \qquad (10)$$

wherein, i denotes the serial number of the comparative example;
j denotes the serial number of the example;
$D_{Aij}$ denotes the relative alkaline potential of the EMD powder obtained in the Example j in the group to which the Comparative Example i belongs;
$A_{ij}$ denotes the alkaline potential of the EMD powder obtained in the Example j in the group to which the Comparative Example i belongs; and
$A_{ii}$ denotes the alkaline potential of the EMD powder obtained in the Comparative Example i in the group to which the Comparative Example i belongs.

6. Open-circuit voltage of battery (69c OCV, 10c OCV)

An open-circuit voltage of a battery is measured by use of a 5V-100mA-S1 battery discharging testing system made by Guangdong Xinwei Electronic Technology Co., Ltd..

Under the condition that a discharge current was set to 69mA and a continuous discharge mode was adopted, the voltage of a battery obtained in the Production Example, which was measured in an open-circuit state, was 69c OCV.

Under the condition that a discharge current was set to 10mA and a continuous discharge mode was adopted, the voltage of the battery measured in an open-circuit state was 10c OCV.

1 hour after the test battery was prepared, the open-circuit voltage was measured in an open-circuit state.

For ease of analysis, relative open-circuit voltages were used to represent differences between the open-circuit voltages of the batteries made from the EMD powders obtained in the examples and the comparative examples in the same group. In the present disclosure, the relative open-circuit voltages can be obtained by standardizing the open-circuit voltages of the batteries made from the EMD powders obtained in the comparative examples and the examples of each group. The relative open-circuit voltage under the condition that the discharge current was 69mA can be calculated by Formula (11):

$$D_{69cOCVij} = \frac{69cOCV_{ij}}{69cOCV_{ii}} \times 100\% \qquad (11)$$

wherein, i denotes the serial number of the comparative example;

j denotes the serial number of the example;

$D_{69cOCVij}$ denotes the relative open-circuit voltage of the battery made from the EMD powder obtained in the Example j in the group to which the Comparative Example i belongs, under the condition that the discharge current was 69mA;

$69cOCV_{ij}$ denotes the open-circuit voltage of the battery made from the EMD powder obtained in the Example j in the group to which the Comparative Example i belongs, under the condition that the discharge current was 69mA; and

$69cOCV_{ii}$ denotes the open-circuit voltage of the battery made from the EMD powder obtained in the Comparative Example i in the group to which the Comparative Example i belongs, under the condition that the discharge current was 69mA.

The relative open-circuit voltage under the condition that the discharge current was 10mA can be calculated by Formula (12):

$$D_{10cOCVij} = \frac{10cOCV_{ij}}{10cOCV_{ii}} \times 100\% \qquad (12)$$

wherein, i denotes the serial number of the comparative example;

j denotes the serial number of the example;

$D_{10cOCVij}$ denotes the relative open-circuit voltage of the battery made from the EMD powder obtained in the Example j in the group to which the Comparative Example i belongs, under the condition that the discharge current was 10mA;

$10cOCV_{ij}$ denotes the open-circuit voltage of the battery made from the EMD powder obtained in the Example j in the group to which the Comparative Example i belongs, under the condition that the discharge current was 10mA; and;

$10cOCV_{ii}$ denotes the open-circuit voltage of the battery made from the EMD powder obtained in the Comparative Example i in the group to which the Comparative Example i belongs, under the condition that the discharge current was 10mA.

7. Closed-circuit voltage of battery (69c CCV, 10c CCV)

A closed-circuit voltage of a battery is measured by use of a 5V-100mA-S1 battery discharging testing system made by Guangdong Xinwei Electronic Technology Co., Ltd..

Under the condition that a discharge current was set to 69mA and a continuous discharge mode was adopted, the voltage of a battery obtained in the Production Example, which was measured at the initial instant the battery was connected to a circuit, was 69c CCV.

Under the condition that a discharge current was set to 10mA and a continuous discharge mode was adopted, the voltage of a battery, which was measured at the initial instant the battery was connected to a circuit, was 10c CCV.

For ease of analysis, relative closed-circuit voltages were used to represent differences between the closed-circuit voltages of the batteries made from the EMD powders obtained in the examples and the comparative examples in the same group. In the present disclosure, the relative closed-circuit voltages can be obtained by standardizing the closed-circuit voltages of the batteries made from the EMD powders obtained in the comparative examples and the examples of each group. The relative closed-circuit voltage under the condition that the discharge current was 69mA can be calculated by Formula (13):

$$D_{69cCVij} = \frac{69cCCV_{ij}}{69cCCV_{ii}} \times 100\% \qquad (13)$$

wherein, i denotes the serial number of the comparative example;

j denotes the serial number of the example;

$D_{69cCCVij}$ denotes the relative closed-circuit voltage of the battery made from the EMD powder obtained in the Example j in the group to which the Comparative Example i belongs, under the condition that the discharge current was 69mA;

$69cCCV_{ij}$ denotes the closed-circuit voltage of the battery made from the EMD powder obtained in the Example j in the group to which the Comparative Example i belongs, under the condition that the discharge current was 69mA; and

$69cCCV_{ii}$ denotes the closed-circuit voltage of the battery made from the EMD powder obtained in the Comparative Example i in the group to which the Comparative Example i belongs, under the condition that the discharge current was 69mA.

The relative closed-circuit voltage under the condition that the discharge current was 10mA can be calculated by Formula (14):

$$D_{10cCCVij} = \frac{10cCCV_{ij}}{10cCCV_{ii}} \times 100\% \qquad (14)$$

wherein, i denotes the serial number of the comparative example;

j denotes the serial number of the example;

$D_{10cCCVij}$ denotes the relative closed-circuit voltage of the battery made from the EMD powder obtained in the Example j in the group to which the Comparative Example i belongs, under the condition that the discharge current was 10mA;

$10cCCV_{ij}$ denotes the closed-circuit voltage of the battery made from the EMD powder obtained in the Example j in the group to which the Comparative Example i belongs, under the condition that the discharge current was 10mA; and

$10cCCV_{ii}$ denotes the closed-circuit voltage of the battery made from the EMD powder obtained in the Comparative Example i in the group to which the Comparative Example i belongs, under the condition that the discharge current was 10mA.

Analyses and conclusions

The influences of different functional aid agents and different amount of the aid agents on the surface hardness and the radial strength of a formed tablet were analyzed.

The tablets made from a plurality of groups of EMD test samples were subjected to an axial surface hardness test by use of an FHR-1 Rockwell hardness tester (the Rockwell hardness is an indicator of the hardness of a tested object determined according to a plastic deformation depth of an indentation, and measured by HRB); and the tablets made from a plurality of groups of EMD test samples were subjected to a radial strength test by use of a YD-1 tablet hardness tester (the tablet hardness relates to the appearance quality and the internal quality of a tablet, and the radial strength can reflect the strength of the tablet in a radial direction).

Table 1 shows the relative alkaline potential, Mg content, and Na content of the EMD powders obtained in the Comparative Examples 1 to 12, and the Examples 1 to 14, and further shows the relative compaction density, relative ultrafine particle yield and relative axial surface hardness of the EMD powders obtained in the Comparative Examples 1-3 and 5-12, the Examples 1-9, 13 and 14. Table 2 shows the relative radial strength of tablet and the relative friability of the EMD obtained in the Comparative Examples 1-3 and 5-12, the Examples 1-9, 13 and 14, and further shows the relative open-circuit voltage (relative 69c OCV) and the relative closed-circuit voltage (relative 69c CCV), under the condition that a discharge current was 69mA, of the batteries made from the EMD powders obtained in the Comparative Examples 1 to 12 and the Examples 1 to 14, and the relative open-circuit voltage (relative 10c OCV) and the relative closed-circuit voltage (relative 10c CCV), under the condition that a discharge current was 10mA, of the batteries made from the EMD powders obtained in the Comparative Examples 1 to 12 and the Examples 1 to 14.

TABLE 1

| Sample No. | i | j | $D_{Aij}$ | Mg content (ppm) | Na content (ppm) | $D_{Fij}$ | $D_{Fij}$ | $D_{Hij}$ |
|---|---|---|---|---|---|---|---|---|
| Comparative Example 1 | | | 100.0% | 43 | 2003 | 100.0% | 100.0% | 100.0% |
| Example 1 | 1 | 1 | 102.0% | 724 | 1371 | 100.4% | 90.13% | 97.71% |
| Example 2 | | 2 | 104.1% | 1954 | 723 | 100.8% | 86.84% | 97.13% |
| Example 3 | | 3 | 106.1% | 5331 | 461 | 100.8% | 76.97% | 97.90% |
| Comparative Example 2 | | | 100.0% | 47 | 1911 | 100.0% | 100.0% | 100.0% |
| Example 4 | 2 | 4 | 100.0% | 331 | 1313 | 100.4% | 95.85% | 98.31% |
| Example 5 | | 5 | 100.7% | 1665 | 1222 | 100.3% | 88.07% | 99.06% |
| Example 6 | | 6 | 103.8% | 4373 | 895 | 100.7% | 87.43% | 99.25% |
| Comparative Example 3 | | | 100.0% | 47 | 1911 | 100.0% | 100.0% | 100.0% |
| Example 7 | 3 | 7 | 101.0% | 893 | 1754 | 100.6% | 82.01% | 98.31% |
| Example 8 | | 8 | 103.1% | 1913 | 1047 | 100.4% | 79.86% | 99.06% |
| Example 9 | | 9 | 106.1% | 4466 | 900 | 100.5% | 79.14% | 97.57% |
| Comparative Example 4 | | | 100.0% | 45 | 1648 | | | |
| Example 10 | 4 | 10 | 100.0% | 410 | 989 | | | |
| Example 11 | | 11 | 100.3% | 1618 | 1000 | | | |
| Example 12 | | 12 | 101.0% | 3735 | 310 | | | |
| Comparative Example 5 | 5 | | 100.0% | 41 | 1595 | 100.0% | 100.0% | 100.0% |
| Example 13 | | 13 | 100.0% | 27 | 1173 | 100.2% | 91.73% | 99.04% |
| Comparative Example 6 | 6 | | 100.0% | 49 | 2604 | 100.0% | 100.0% | 100.0% |
| Example 14 | | 14 | 100.7% | 135 | 2374 | 100.2% | 82.05% | 99.25% |
| Comparative Example 7 | 7 | | 100.0% | 48 | 2405 | 100.0% | 100.0% | 100.0% |
| Comparative Example 8 | 8 | | 99.32% | 49 | 2315 | 99.97% | 105.4% | 99.81% |
| Comparative Example 9 | 9 | | 98.97% | 48 | 2323 | 99.97% | 87.94% | 100.6% |
| Comparative Example 10 | 10 | | 100.0% | 48 | 2405 | 100.0% | 100.0% | 100.0% |
| Comparative Example 11 | 11 | | 100.0% | 245 | 2307 | 100.0% | 110.0% | 99.61% |
| Comparative Example 12 | 12 | | 100.0% | 397 | 1939 | 100.09 | 100.1% | 100.0% |

TABLE 2

| Sample No. | i | J | $D_{Sij}$ | $D_{cij}$ | $D_{69cOCVij}$ | $D_{69cCCVij}$ | $D_{10cOCVij}$ | $D_{10cCCVij}$ |
|---|---|---|---|---|---|---|---|---|
| Comparative Example 1 | | | 100.0% | 100.0% | 100.0% | 100.0% | 100.0% | 100.0% |
| Example 1 | 1 | 1 | 96.55% | 85.93% | | | | |
| Example 2 | | 2 | 95.65% | 68.98% | 100.7% | 101.0% | 100.6% | 99.28% |
| Example 3 | | 3 | 92.45% | 47.78% | 101.1% | 99.90% | 101.1% | 100.7% |

(continued)

| Sample No. | i | J | $D_{Sij}$ | $D_{cij}$ | $D_{69cOCVij}$ | $D_{69cCCVij}$ | $D_{10cOCVij}$ | $D_{10cCCVij}$ |
|---|---|---|---|---|---|---|---|---|
| Comparative Example 2 | 2 |  | 100.0% | 100.0% | 100.0% | 100.0% | 100.0% | 100.0% |
| Example 4 |  | 4 | 93.47% | 82.12% | 100.1% | 99.94% | 100.1% | 100.1% |
| Example 5 |  | 5 | 94.85% | 73.89% | 100.2% | 99.74% | 100.2% | 100.2% |
| Example 6 |  | 6 | 84.64% | 65.52% | 100.6% | 100.3% | 100.5% | 100.5% |
| Comparative Example 3 | 3 |  | 100.0% | 100.0% | 100.0% | 100.0% | 100.0% | 100.0% |
| Example 7 |  | 7 | 80.68% | 81.52% | 100.3% | 100.1% | 100.2% | 100.1% |
| Example 8 |  | 8 | 82.15% | 50.87% | 100.5% | 100.4% | 100.4% | 100.3% |
| Example 9 |  | 9 | 83.07% | 30.75% | 100.9% | 100.9% | 100.8% | 100.7% |
| Comparative Example 4 | 4 |  |  |  | 100.0% | 100.0% | 100.0% | 100.0% |
| Example 10 |  | 10 |  |  | 100.1% | 99.87% | 100.1% | 99.56% |
| Example 11 |  | 11 |  |  | 100.2% | 94.14% | 100.1% | 99.82% |
| Example 12 |  | 12 |  |  | 100.6% | 95.58% | 100.4% | 100.5% |
| Comparative Example 5 | 5 |  | 100.0% | 100.0% | 100.0% | 100.0% | 100.0% | 100.0% |
| Example 13 |  | 13 | 90.84% | 82.65% | 100.0% | 99.30% | 100.1% | 99.36% |
| Comparative Example 6 | 6 |  | 100.0% | 100.0% | 100.0% | 100.0% | 100.0% | 100.0% |
| Example 14 |  | 14 | 95.99% | 90.80% | 100.0% | 100.1% | 100.2% | 101.9% |
| Comparative Example 7 | 7 |  | 100.0% | 100.0% | 100.0% | 100.0% | 100.0% | 100.0% |
| Comparative Example 8 | 8 |  | 102.0% | 101.6% | 99.89% | 100.8% | 99.82% | 99.69% |
| Comparative Example 9 | 9 |  | 108.3% | 100.1% | 99.87% | 100.7% | 99.87% | 98.97% |
| Comparative Example 10 | 10 |  | 100.0% | 100.0% | 100.0% | 100.0% | 100.0% | 100.0% |
| Comparative Example 11 | 11 |  | 105.8% | 99.25% | 100.0% | 100.5% | 99.99% | 99.89% |
| Comparative Example 12 | 12 |  | 107.5% | 98.02% | 99.98% | 100.8% | 99.93% | 99.93% |

It should be noted that the EMD powders prepared in the same preparation example were taken as one group in the present disclosure.

Analyses of test results

1. Ultrafine particle yield and compaction density

A plurality groups of EMD test samples were subjected to a compaction process with an FT-100F single punch tablet compression machine (1Tf, P=109.2MPa), and the ultrafine particle yields of the samples was measured during the compaction process. Different EMD powders have significantly different macroscopic behavior in a positive ring formation process. Fine powder is generated due to the relative movement and the interaction between the granules caused by extrusion in a ring pelleting process. An ultrafine particle yield in the ring pelleting process has a direct negative influence on the utilization rate of the EMD granules in the ring pelleting process and the wear of the production tools. The lower the ultrafine particle yield is, the less the tools are worn. Therefore, the reduction of the ultrafine particle yield can improve a molding yield.

The analysis of the data in Table 1 shows a high correlation between the amount of the added alkaline-earth-oxide aid agent and the ultrafine particle yield during the compression process. The larger the amount of the aid agent used in the grinding process, the more remarkable the reduction in the ultrafine particle yield.

It is observed in the comparative experiments using different kinds of aid agents that the alkaline-earth-oxide aid agents can significantly reduce the ultrafine particle yield during the molding process, while $SiO_2$ (in the Comparative Examples 8 and 9) and $MgSO_4 \cdot 7H_2O$ (in the Comparative Examples 11 and 12) as the aid agent do not produce similar effects. In addition, between MgO and CaO which are both alkaline earth oxides, the effect of MgO for reducing the ultrafine particle yield is better than that of CaO.

It is observed in the comparative experiments in which MgO was added in different steps that the addition of MgO in the neutralization step can also reduce the ultrafine particle yield during the molding process, but the effect of reducing the ultrafine particle yield in the case of adding MgO in the neutralization step is worse than that in the case of adding MgO in the grinding step.

The pilot scale test (using a 5R Raymond mill) in which a smaller amount of aid agent (0.02% MgO) was added also confirms the above findings. The data show that the addition of merely a tiny amount of grinding aid agent (e.g. MgO) can significantly reduce the ultrafine particle yield of a final product in a molding process in large-scale industrial production. The addition of the aid agent MgO can greatly reduce the ultrafine particle yield in the compaction molding process after the granulation, which not only improves the utilization rate of the EMD granules in the molding process, but also largely reduces the physical wear of the molding tools caused by the fine powder.

MgO powder or CaO powder, when added as an aid agent in the grinding step, has a good effect on the compaction density under a pressure of 109.2MPa, which is also confirmed by the test of industrial pilot scale products.

It can be seen from the data in Table 1 that, the compaction densities of the tablets made from the EMD powders obtained in the Examples 1 to 14 are slightly greater than those of the tablets made from the EMD powders obtained in the corresponding comparative examples.

It is observed in the comparative tests in which MgO was added in different processing steps that the addition of MgO in the neutralization step can also increase the compaction density of the tablet made from the EMD powder, and can produce an effect similar to that made by adding MgO in the grinding step.

By comparing the Comparative Examples 8 and 9 in which $SiO_2$ powder was added in the preparation processes with the corresponding Comparative Example 7 in which $SiO_2$ powder was not added, the compaction densities of the tablets made from the EMD powders obtained in the Comparative Examples 8 and 9 are lower than the compaction density of the tablet made from the EMD powder obtained in the Comparative Example 7.

By comparing the Comparative Examples 11 and 12 in which $MgSO_4 \cdot 7H_2O$ powder was added in the preparation processes with the corresponding Comparative Example 7 in which $MgSO_4 \cdot 7H_2O$ was not added, the compaction densities of the tablets made from the EMD powders obtained in the Comparative Examples 11 and 12 are higher than the compaction density of the tablet made from the EMD powder obtained in the Comparative Example 7.

2. Axial surface hardness and radial strength of tablet

It is easy to be understood that the smaller the axial surface hardness is, the softer the surfaces of the tablet in one dimension of compaction molding is, which indicates less frictional damage made to the molding tool by the granulated particles in a compression molding process. Moreover, the smaller the radial strength of tablet is, the softer the surfaces of the tablet in the other dimension of compression molding is, which also indicates less frictional damage made to the molding tool by the granulated particles in the compression molding process.

It can be seen from Table 1 that, in the same group, the axial surface hardness of the EMD powders obtained in the examples in which the aid agent was added is slightly less than that of the EMD powders obtained in the comparative examples in which no aid agent was added. Moreover, in the same group, the radial strength of tablet of the EMD powders obtained in the examples in which the aid agent was added is less than the radial strength of tablet of the EMD powders obtained in the comparative examples in which no aid agent was added. The addition of different alkaline-earth-oxide aid agents in the grinding process of EMD can all decrease the hardness and strength of the tablets made from the EMD powder granules (the tablets are prepared under a pressure of 109.2MPa) to different degrees, and reduce the physical wear of granulating and ring pelleting molding tools made by the EMD powder. Meanwhile, the experimental data show that magnesium oxide, when used as a grinding aid agent, produces a more obvious effect of improving the wear of the molding tools and the molding process (measured by surface hardness and radial strength) than calcium oxide. The amount of the used grinding aid agent has a remarkable effect on the improvement in powder characteristics. In general, an increase in the amount of the used grinding aid agent (alkaline earth oxide powder) within a certain range facilitates the improvement in the powder characteristics of the EMD powder.

It should be noted that, when the grinding aid agent was added at an amount of 0.5% of EMD, the improvement in the surface hardness of the formed tablet reaches a peak, while the improvement in the radial strength does not get better greatly.

It is observed in the comparative tests in which MgO was added in different processing steps that the addition of MgO in the neutralization step can also reduce the axial surface hardness and the radial strength of the tablet made from the EMD powder, and can produce an effect similar to that made by adding MgO in the grinding step.

The pilot scale test (using a 5R Raymond mill) in which a smaller amount of aid agent (0.02% MgO) was added also confirms the above findings.

In comparison with the EMD powder obtained in the Comparative Example 7 in which no aid agent was added, as for the EMD powders obtained in the Comparative Examples 8 and 9 in which $SiO_2$ powder was added, ultrafine particle yields and radial strength of tablet both increased, which produces an adverse effect on the molding performance of EMD.

Similarly, in comparison with the EMD powder obtained in the Comparative Example 10 in which no aid agent was added, as for the EMD powder obtained in the Comparative Examples 11 and 12 in which $MgSO_4 \cdot 7H_2O$ powder was added as an aid agent, ultrafine particle yields and radial strength of tablet both increased, which produces an adverse effect on EMD.

3. Friability of tablet

The friability of tablet is an indicator of the integrity of structure of a formed-body by granulation. The smaller the friability of a formed tablet is, the better the integrity of the formed tablet is, which indicates that the tablet is less likely to break on a production line. In a ring pelleting process of granules in battery production, the formed positive rings are inevitably subjected to vibration, extrusion or friction during the procession of production, transportation and insertion into steel cans, and thus are very prone to be damaged, which results in an adverse effect on the application of the positive rings.

As shown in Table 2, as for the same group, the friability of the tablets made from the EMD powders obtained in the Examples 1 to 14 in which an aid agent including alkaline earth oxide powder was added, is less than that of the tablets made from the EMD powders obtained in the comparative examples in which no aid agent was added.

It is observed that, in the comparative tests in which MgO was added in different processing steps, the addition of MgO in the neutralization step can also have an effect of reducing the friability of the tablets formed from the EMD powder. With the same ratio of 100:0.2 ($MnO_2$:MgO), such friability reducing effect of the addition of MgO in the neutralization step is similar to that of the addition of MgO in the grinding step. However, when the ratio is increased, such friability reducing effect of the addition of MgO in the neutralization step is far worse than that of the addition of MgO in the grinding step.

It can be seen from the data of the Comparative Examples 7 to 9 in Table 2 that the addition of $SiO_2$ powder as an aid agent does not reduce the friability of the tablets of EMD powder.

It can be seen from the data of the Comparative Examples 10 and 11 in Table 2 that the addition of $MgSO_4 \cdot 7H_2O$ powder as an aid agent can also have an effect of reducing the friability of the tablets of EMD powder, but the effect is not obvious when compared with MgO.

In large-scale industrial production, the addition of merely a tiny amount of an aid agent (e.g. MgO powder) including an alkaline earth oxide powder can significantly reduce the friability of the tablets made by compressing a final product. As observed above, the addition of MgO powder as an aid agent can greatly reduce the friability in the compression molding process after the granulation, which indicates that a ring breakage rate can be effectively reduced by adding the aid agent in the grinding process of the electrolytic sheet, thereby improving the integrity of the molded powder.

4. Alkaline potential

The alkaline potential represents a difference in potential between the EMD powder and the calomel reference electrode; and the higher the alkaline potential is, the better. It can be seen from Table 1 that, for the EMD powders obtained in the preparation examples, the alkaline potential of the EMD powders obtained in the Examples 1 to 14 in which an aid agent was added was slightly higher than that of the EMD powders obtained in the comparative examples in which no aid agent was added.

With no aid agent added in the preparation processes, the EMD powders obtained in the Comparative Examples 1 to 6 have relatively low alkaline potential.

It is observed in the comparative experiments in which MgO was added in different steps that the alkaline potential of the EMD powders, which were obtained in the examples in which MgO was added in the neutralization step, is slightly increased in comparison with the alkaline potential of the EMD powders obtained in the comparative examples, but such effect of increasing the alkaline potential is less than that of the addition of MgO in the grinding step.

Comparative Examples 8 and 9 in which $SiO_2$ powder was added as an aid agent have a lower alkaline potential of the EMD powders than that in the Comparative Example 7.

Compared with the Comparative Example 10, in the Comparative Example s 11 and 12 in which $MgSO_4 \cdot 7H_2O$ powder was added as an aid agent, the alkaline potentials of the EMD powders obtained are not increased.

It can be seen that $MgSO_4 \cdot 7H_2O$ powder does not affect the alkaline potential of EMD, and SiO2 powder used as an aid agent has a negative influence on the alkaline potential of EMD.

It can also be seen from Table 1 that MgO powder as an aid agent in the grinding step or in the neutralization step, is beneficial to the improvement in the alkaline potential of the EMD powder. Within a limited range, the larger the amount of the used aid agent is, the higher the alkaline potential is increased. It is apparent that the use of MgO powder, especially in a small amount, as an aid agent in the grinding step can produce a more obvious effect of increasing the alkaline potential.

5. Open-circuit voltage and closed-circuit voltage of a battery

The higher the open-circuit voltage and closed-circuit voltage of a battery are, the higher the initial discharge plateau of the battery is.

It can be seen from Table 2 that the batteries made from the EMD powders prepared with the methods in which an alkaline earth oxide powder was added as an aid agent have relatively high open-circuit voltages. The batteries made from the EMD powders prepared with the preparation methods in which $SiO_2$ powder was added as an aid agent have relatively low open-circuit voltages. The batteries made from the EMD powders prepared with the preparation methods in which $MgSO_4 \cdot 7H_2O$ powder was added as an aid agent also have relatively low open-circuit voltages.

It can be seen from Table 2 that the batteries made from the EMD powders prepared with the methods in which MgO powder was added as an aid agent in the grinding step have relatively high closed-circuit voltages, but the methods in which CaO was added as a grinding aid agent do not produce the same effect. The methods in which MgO was added as an aid agent in the neutralization step have a negative effect on the closed-circuit voltages of the batteries made from the obtained EMD powders.

The batteries made from the EMD powders prepared with the preparation methods in which $SiO_2$ powder was added as an aid agent have relatively low closed-circuit voltages. The batteries made from the EMD powders prepared with the preparation methods in which $MgSO_4 \cdot 7H_2O$ powder was added as an aid agent also have relatively low closed-circuit voltages.

Specifically, the addition of an aid agent including MgO powder in the grinding step (such as the Examples 1, 3, 5 and 6) can increase the closed-circuit voltage more effectively.

6. Mg content and Na content

It can be seen from Table 1 the MgO aid agent, no matter being added in the grinding step or in the neutralization step, can partially or totally replace the NaOH solution. As the amount of the addition of the aid agent increases, the Mg content of the final product increases, and the Na content of the final product decreases (that is, the consumption of NaOH is reduced).

7. Effects of different grinding aid agents and different usage amount on grinding mediums

Under the condition that the same high-speed planetary ball mill was used, the iron content of the EMD powder, which is prepared with the method in which MgO powder with a mass percentage of 0.08% is added in the grinding step, is far lower than that of the EMD powder prepared without adding an aid agent.

For example, in the case where the grinding ball is made of 304 stainless steel, the iron content of the EMD powder, which is prepared with the method in which 0.08% of MgO powder is added in the grinding step, is about 60% of the iron content of the EMD powder prepared without adding an aid agent.

In the case where the grinding ball is made of carbon steel, the iron content of the EMD powder, which is prepared with the method in which 0.08% of MgO powder is added in the grinding step, is about 85% of the iron content of the EMD powder prepared without adding an aid agent.

In the case where the grinding ball is a chromium-plated steel ball, the iron content of the EMD powder, which is prepared with the method in which 0.08% of MgO powder is added in the grinding step, is about 75% of the iron content of the EMD powder prepared without adding an aid agent.

The present disclosure demonstrates that the use of an aid agent, especially the addition of a small amount of an aid agent in a grinding step, can endow the EMD powder with good physical properties (including significantly improved formability, ultrafine particle yield and powder characteristics, and reduced radial strength of tablet and axial surface hardness) and higher alkaline potential. These improvements suggest that the EMD powder prepared according to the present disclosure, when applied to alkaline battery production, can produce the following beneficial effects on the battery production processes: reducing wear of molding tool, and increasing integrity of formed ring, on-line rate of production line, compaction density, OCV and CCV, etc.

It should be understood that the above embodiments are merely exemplary embodiments employed to illustrate the principles of the present disclosure, and the present disclosure is not limited thereto.

**Claims**

1. A method for preparing electrolytic manganese dioxide powder, comprising:

providing an electrolytic manganese dioxide chip which is an irregularly shaped sheet-like object and has a maximum linear dimension not larger than 200mm;
performing a grinding step and a neutralization step; and
finally obtaining an electrolytic manganese dioxide powder, wherein the aid agent comprises an alkaline earth oxide powder,
wherein the grinding step and the neutralization step specifically comprise:

performing the grinding step before the neutralization step, and adding an aid agent only in the grinding step, or adding the aid agent both in the grinding step and in the neutralization step;
or
performing the grinding step after the neutralization step, and adding the aid agent only in the neutralization step, or adding the aid agent both in the grinding step and in the neutralization step.

2. The method of claim 1, wherein the step of adding the aid agent in the grinding step comprises:

blending an object to be ground with the aid agent to obtain a first mixture, with a weight ratio of the object to be ground to the alkaline earth oxide powder in the aid agent being 100:(0.01-1); and
grinding the first mixture.

3. The method of claim 2, wherein the weight ratio of the object to be ground to the alkaline earth oxide powder in the aid agent is 100:(0.01-0.5).

4. The method of claim 1, wherein the step of adding the aid agent in the neutralization step comprises:

blending an object to be neutralized with the aid agent to obtain a second mixture, with a weight ratio of the object to be neutralized to the alkaline earth oxide powder in the aid agent being 100:(0.01-1); and
neutralizing the second mixture.

5. The method of claim 4, wherein the weight ratio of the object to be neutralized to the alkaline earth oxide powder is 100:(0.01-0.5).

6. The method of any one of claims 1 to 5, wherein the aid agent is a slurry of the alkaline earth oxide powder.

7. The method of any one of claims 1 to 5, wherein the alkaline earth oxide powder comprises magnesium oxide powder and/or calcium oxide powder.


**Patentansprüche**

1. Verfahren zum Herstellen eines Pulvers von elektrolytischem Mangandioxid, das umfasst:

Bereitstellen eines Chips aus elektrolytischem Mangandioxid, der ein unregelmäßig geformtes plattenähnliches Objekt ist und eine maximale lineare Abmessung von nicht mehr als 200 mm aufweist;
Durchführen eines Mahlschritts und eines Neutralisierungsschritts; und
schließlich Erhalten eines Pulvers von elektrolytischem Manganoxid, wobei das Hilfsmittel ein Erdalkalioxidpulver umfasst,
wobei der Mahlschritt und der Neutralisierungsschritt im Spezifischen umfassen:

Durchführen des Mahlschritts vor dem Neutralisierungsschritt und Zusetzen eines Hilfsmittels nur in dem Mahlschritt oder Zusetzen des Hilfsmittels sowohl in dem Mahlschritt als auch in dem Neutralisierungsschritt;
oder
Durchführen des Mahlschritts nach dem Neutralisierungsschritt und Zusetzen des Hilfsmittels nur in dem Neutralisierungsschritt oder Zusetzen des Hilfsmittels sowohl in dem Mahlschritt als auch in dem Neutralisierungsschritt.

2. Verfahren nach Anspruch 1, wobei der Schritt des Zusetzens des Hilfsmittels in dem Mahlschritt umfasst:

Vermengen eines zu mahlenden Objekts mit dem Hilfsmittel, um ein erstes Gemisch zu erhalten, wobei ein Gewichtsverhältnis des zu mahlenden Objekts zu dem Erdalkalioxidpulver in dem Hilfsmittel 100:(0,01 bis 1) beträgt; und

Mahlen des ersten Gemischs.

**3.** Verfahren nach Anspruch 2, wobei das Gewichtsverhältnis des zu mahlenden Objekts zu dem Erdalkalioxidpulver in dem Hilfsmittel 100:(0,01 bis 0,5) beträgt.

**4.** Verfahren nach Anspruch 1, wobei der Schritt des Zusetzens des Hilfsmittels in dem Neutralisierungsschritt umfasst:

Vermengen eines zu neutralisierenden Objekts mit dem Hilfsmittel, um ein zweites Gemisch zu erhalten, wobei ein Gewichtsverhältnis des zu neutralisierenden Objekts zu dem Erdalkalioxidpulver in dem Hilfsmittel 100:(0,01 bis 1) beträgt; und
Neutralisieren des zweiten Gemischs.

**5.** Verfahren nach Anspruch 4, wobei ein Gewichtsverhältnis des zu neutralisierenden Objekts zu dem Erdalkalioxidpulver 100:(0,01 bis 0,5) beträgt.

**6.** Verfahren nach einem der Ansprüche 1 bis 5, wobei das Hilfsmittel eine Aufschlämmung des Erdalkalioxidpulvers ist.

**7.** Verfahren nach einem der Ansprüche 1 bis 5, wobei das Erdalkalioxidpulver Magnesiumoxidpulver und/oder Calciumoxidpulver umfasst.

**Revendications**

**1.** Procédé pour préparer une poudre de dioxyde de manganèse électrolytique, comprenant :

l'obtention d'un copeau de dioxyde de manganèse électrolytique qui est un objet analogue à une feuille de forme irrégulière et qui a une dimension linéaire maximale non supérieure à 200 mm ;
la mise en oeuvre d'une étape de broyage et d'une étape de neutralisation ; et
finalement l'obtention d'une poudre de dioxyde de manganèse électrolytique, dans laquelle l'agent auxiliaire comprend une poudre d'oxyde d'alcalino-terreux,
dans lequel l'étape de broyage et l'étape de neutralisation comprennent spécifiquement :

la mise en oeuvre de l'étape de broyage avant l'étape de neutralisation, et l'addition d'un agent auxiliaire uniquement dans l'étape de broyage, ou l'addition de l'agent auxiliaire à la fois dans l'étape de broyage et dans l'étape de neutralisation ; ou
la mise en oeuvre de l'étape de broyage après l'étape de neutralisation, et l'addition de l'agent auxiliaire uniquement dans l'étape de neutralisation, ou l'addition de l'agent auxiliaire à la fois dans l'étape de broyage et dans l'étape de neutralisation.

**2.** Procédé selon la revendication 1, dans lequel l'étape d'addition de l'agent auxiliaire dans l'étape de broyage comprend :

le mélange d'un objet devant être broyé avec l'agent auxiliaire pour que soit obtenu un premier mélange, le rapport en poids de l'objet devant être broyé à la poudre d'oxyde d'alcalino-terreux dans l'agent auxiliaire étant de 100/(0,01 à 1) ; et
le broyage du premier mélange.

**3.** Procédé selon la revendication 2, dans lequel le rapport en poids de l'objet devant être broyé à la poudre d'oxyde d'alcalino-terreux dans l'agent auxiliaire est de 100/(0,01 à 0,5).

**4.** Procédé selon la revendication 1, dans lequel l'étape d'addition de l'agent auxiliaire dans l'étape de Neutralisation comprend :

le mélange d'un objet devant être neutralisé avec l'agent auxiliaire pour que soit obtenu un deuxième mélange, le rapport en poids de l'objet devant être broyé à la poudre d'oxyde d'alcalino-terreux dans l'agent auxiliaire étant de 100/(0,01 à 1) ; et

la neutralisation du deuxième mélange.

5. Procédé selon la revendication 4, dans lequel le rapport en poids de l'objet devant être neutralisé à la poudre d'oxyde d'alcalino-terreux dans l'agent auxiliaire est de 100/(0,01 à 0,5).

6. Procédé selon l'une quelconque des revendications 1 à 5, dans lequel l'agent auxiliaire est une bouillie de la poudre d'oxyde d'alcalino-terreux.

7. Procédé selon l'une quelconque des revendications 1 à 5, dans lequel la poudre d'oxyde d'alcalino-terreux comprend une poudre d'oxyde de magnésium et/ou une poudre d'oxyde de calcium.

placing an original sample into a grinding jar

blending an aid agent with the original sample at a predetermined proportion

grinding the mixture of the original sample and the aid agent

sieving the powder obtained after the grinding

placing the powder obtained by the sieving into a beaker and adding distilled water, then stirring to form a uniform slurry, and neutralizing with a NaOH solution to reach a preset pH end point

filtering the neutralized product after the neutralization is finished

drying the filtering product to obtain a finished product of EMD powder

Fig. 1

300g of original sample A was placed in a polyurethane grinding jar having a volume of 250ml ⟋ S110

a predetermined proportion of aid agent MgO powder was added into the polyurethane grinding jar ⟋ S120

a QXQM-2 planetary ball mill made by Changsha Tianchuang Powder Technology Co. Ltd. (TENCAN POWDER) was used to perform a grinding process, with the grinding frequency being 115Hz and the grinding time being 900s ⟋ S130

after the grinding was finished, the obtained powder was sieved with a 60-mesh screen made by HAVER&BOECKER (Germany) ⟋ S140

50g of the grinding product obtained after sieving with the 60-mesh screen was placed in a beaker, 150ml of distilled water was added to obtain a mixture, a JB-1B magnetic stirrer, which is made by Shanghai Leici Chuangyi Instruments Co. Ltd., was used to stir the mixture to form a uniform slurry, and then a NaOH solution (1mol/L) was used for neutralizing to a preset pH end point ⟋ S150

after the neutralization was completed, the slurry was filtered with a Buchner funnel and a double-layer filter paper ⟋ S160

the filter cake of EMD obtained after the filtering was continuously dried at 60°C for 4 hours to obtain an EMD powder ⟋ S170

Fig. 2

100g of original sample A was placed in a polyurethane grinding jar having a volume of 250ml ⌐ S210

a QXQM-series planetary ball mill was used to grind the original sample A (with a grinding frequency of 115Hz and a grinding time of 900s) ⌐ S220

after the grinding was finished, the grinding product was sieved with a 60-mesh screen, and then the grinding product obtained after sieving with the 60-mesh screen was provided for neutralization ⌐ S230

50g of the EMD powder of the under 60-mesh cut was placed in a beaker, 150ml of distilled water was added to obtain a mixture, the mixture was stirred to form a uniform slurry (a predetermined proportion of aid agent including magnesium oxide powder was added before neutralization), and then a NaOH solution of 1mol/L was used for neutralizing to a preset pH end point ⌐ S240

after the neutralization was completed, the slurry was filtered with a Buchner funnel and a double-layer filter paper ⌐ S250

the filter cake of EMD obtained after the filtering was continuously dried at 60°C for 4 hours to obtain a EMD powder ⌐ S260

Fig. 3

100g of original sample A was placed in a polyurethane grinding jar having a volume of 250ml

S310

a predetermined proportion of aid agent magnesium oxide solid powder was added into the polyurethane grinding jar

S320

the mixture in the polyurethane grinding jar was ground by a QXQM-series planetary ball mill (with a grinding frequency of 115Hz and a grinding time of 900s)

S330

after the grinding was finished, the powder obtained after the grinding was sieved with a 60-mesh screen, and the grinding product obtained after sieving with the 60-mesh screen was provided for neutralization

S340

50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point

S350

after the neutralization was completed, the slurry was filtered with a Buchner funnel and a double-layer filter paper

S360

the filter cake of EMD obtained after the filtering was continuously dried at 60°C for 4 hours to obtain a EMD powder

S370

Fig. 4

200g of original sample A was placed in a polyurethane grinding jar having a volume of 250ml ⟩ S410

the original sample A in the polyurethane grinding jar was ground by a QXQM-series planetary ball mill (with a grinding frequency of 115Hz and a grinding time of 900s) ⟩ S420

after the grinding was finished, the grinding product obtained after the grinding was sieved with a 60-mesh screen, and the grinding product obtained after sieving with the 60-mesh screen was provided for neutralization ⟩ S430

50g of the grinding product obtained after sieving with the 60-mesh screen was placed in a beaker, 150ml of distilled water was added to obtain a mixture, the mixture was stirred to form a uniform slurry (a predetermined proportion of aid agent magnesium oxide solid powder was added before neutralization), and then a NaOH solution of 1mol/L was used for neutralizing to a preset pH end point ⟩ S440

after the neutralization was completed, the slurry was filtered with a Buchner funnel and a double-layer filter paper ⟩ S450

the filter cake of EMD obtained after the filtering was continuously dried at 60°C for 4 hours to obtain a EMD powder ⟩ S460

Fig. 5

200g of original sample A was placed in a polyurethane grinding jar having a volume of 250ml     S510

a predetermined number of grams of aid agent including calcium oxide solid powder was added into the polyurethane grinding jar     S520

the mixture of the aid agent and the original sample A was ground by a QXQM-series planetary ball mill (with a grinding frequency of 115Hz and a grinding time of 900s)     S530

after the grinding was finished, the powder obtained after the grinding was sieved with a 60-mesh screen, and the grinding product obtained after sieving with the 60-mesh screen was provided for neutralization     S540

50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point     S550

after the neutralization was completed, the slurry was filtered with a Buchner funnel and a double-layer filter paper     S560

the filter cake of EMD obtained after the filtering was continuously dried at 60°C for 4 hours to obtain a corresponding EMD powder, wherein the washed EMD powder being dried by a 101A-2E electric blast drying oven made by Shanghai Laboratory Instrument Works Co. Ltd     S570

Fig. 6

| a magnesium oxide slurry (softened water + magnesium oxide powder) prepared with a polypropylene mixing tank have a volume of $3m^3$ was used as an aid agent |

S610

| the original sample B was continuously conveyed into a 5R Raymond mill for grinding through a belt conveyor according to production processing steps |

S620

| the obtained aid agent was sprayed on the electrolytic sheet at a ratio of 0.02:100 ($MgO:MnO_2$) before the electrolytic sheet was conveyed into the mill |

S630

| after grinding, neutralization, solid-liquid separation, drying, blending and packaging, the obtained powder was made into 30 tons of finished product of EMD powder, and 1000g EMD powder randomly taken from the 30 tons of finished product was used as a sample. In this step, the washed EMD powder was dried by a 101A-2E electric blast drying oven made by Shanghai Laboratory Instrument Works Co. Ltd. |

S640

Fig. 7

```
┌─────────────────────────────────────────────────────────────┐
│  150g of original sample A was placed in a polyurethane       │        S710
│            grinding jar having a volume of 250ml              │
└─────────────────────────────────────────────────────────────┘
                              │
┌─────────────────────────────────────────────────────────────┐
│  a predetermined number of grams of aid agent SiO₂ powder     │        S720
│       was added into the polyurethane grinding jar            │
└─────────────────────────────────────────────────────────────┘
                              │
┌─────────────────────────────────────────────────────────────┐
│  a QXQM-series planetary ball mill was used to perform a       │        S730
│  grinding process, with a grinding frequency of 115Hz and a   │
│               grinding time of 900s                           │
└─────────────────────────────────────────────────────────────┘
                              │
┌─────────────────────────────────────────────────────────────┐
│  after the grinding was finished, the powder obtained after   │        S740
│     the grinding was sieved with a 60-mesh screen             │
└─────────────────────────────────────────────────────────────┘
                              │
┌─────────────────────────────────────────────────────────────┐
│  50g of the grinding product obtained after sieving with the  │        S750
│  60-mesh screen was placed in a beaker, 150ml of distilled    │
│  water was added to obtain a mixture, the mixture was stirred │
│  to form a uniform slurry, and then a NaOH solution of 1mol/L │
│       was used for neutralizing to a preset pH end point      │
└─────────────────────────────────────────────────────────────┘
                              │
┌─────────────────────────────────────────────────────────────┐
│  after the neutralization was completed, the slurry was       │        S760
│  filtered with a Buchner funnel and a double-layer filter     │
│                        paper                                  │
└─────────────────────────────────────────────────────────────┘
                              │
┌─────────────────────────────────────────────────────────────┐
│  the filter cake of EMD obtained after the filtering was      │        S770
│  continuously dried at 60°C for 4 hours to obtain a EMD        │
│                        powder                                 │
└─────────────────────────────────────────────────────────────┘
```

150g of original sample A was placed in a polyurethane grinding jar having a volume of 250ml — S710

a predetermined number of grams of aid agent $SiO_2$ powder was added into the polyurethane grinding jar — S720

a QXQM-series planetary ball mill was used to perform a grinding process, with a grinding frequency of 115Hz and a grinding time of 900s — S730

after the grinding was finished, the powder obtained after the grinding was sieved with a 60-mesh screen — S740

50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point — S750

after the neutralization was completed, the slurry was filtered with a Buchner funnel and a double-layer filter paper — S760

the filter cake of EMD obtained after the filtering was continuously dried at 60°C for 4 hours to obtain a EMD powder — S770

Fig. 8

| 150g of original sample A was placed in a polyurethane grinding jar having a volume of 250ml | S810 |

| a predetermined number of grams of aid agent $MgSO_4 \cdot 7H_2O$ powder was added into the polyurethane grinding jar | S820 |

| a QXQM-series planetary ball mill was used to perform a grinding process, with a grinding frequency of 115Hz and a grinding time of 900s | S830 |

| after the grinding was finished, the powder obtained after the grinding was sieved with a 60-mesh screen | S840 |

| 50g of the grinding product obtained after sieving with the 60-mesh screen was placed in a beaker, 150ml of distilled water was added to obtain a mixture, the mixture was stirred to form a uniform slurry, and then a NaOH solution of 1mol/L was used for neutralizing to a preset pH end point | S850 |

| after the neutralization was completed, the slurry was filtered with a Buchner funnel and a double-layer filter paper | S860 |

| the filter cake of EMD obtained after the filtering was continuously dried at 60°C for 4 hours to obtain a EMD powder | S870 |

Fig. 9

a to-be-tested EMD powder was mixed with graphite and a potassium hydroxide solution in proportion and stirred thoroughly to obtain a positive powder

S910

the positive powder was put into a double-roller press and pressed into a thin sheet, the thin sheet was ground into granules, and the granules having particle sizes that were smaller than 10 meshes and larger than 60 meshes were taken as qualified granules, wherein the double-roller press is a JK-GYI-110B electric roller press made by Shenzhen Crystal Connord Automation Technology Co., Ltd.

S920

the granules were added into a tablet press and pressed into positive plates each weighing about 0.5g

S930

the positive plate, a nickel mesh, a zinc gel, separator paper and an electrolyte are assembled in an AG13 battery shell to form a test battery

S940

the test battery was placed in a battery clamp of a DM350 automatic discharge instrument and leave it for 60 minutes

S950

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 108793256 A